# EUROPEAN PATENT APPLICATION

(11) **EP 4 842 121 A1**
(43) Date of publication of application: **18.11.2026**
(21) Application number: 25790429.2
(22) Date of filing: 08.04.2025
(51) Int. Cl.: H04W 72/23, H04W 74/00, H04W 72/21, H04L 5/00, H04L 5/14, H04W 74/0833, H04W 72/0453, H04W 72/0446

(54) **METHOD AND APPARATUS FOR RANDOM ACCESS PROCEDURE IN SBFD SUBBAND**

(30) Priority: 16.04.2024 KR 20240050567
(71) Applicant: Hyundai Motor Company, Seoul 06797 (KR); Kia Corporation, Seoul 06797 (KR)
(72) Inventor: LEE, Jeong Su, Hwaseong-si, Gyeonggi-do 18280 (KR); HONG, Ui Hyun, Hwaseong-si, Gyeonggi-do 18280 (KR); SUH, Young Kil, Hwaseong-si, Gyeonggi-do 18280 (KR); HAHN, Gene Back, Hwaseong-si, Gyeonggi-do 18280 (KR)
(74) Representative: Isarpatent
(86) International application number: PCT/KR2025/004737
(87) International publication number: WO 2025/220943

(57) **Abstract**

A method and an apparatus for a random access procedure in an SBFD subband are disclosed. A method of a user equipment (UE) according to the present invention comprises the steps of: receiving subband full duplex (SBFD) random access channel (RACH) configuration information and legacy RACH configuration information from a base station; determining a valid RACH occasion (RO) on the basis of at least one of the SBFD RACH configuration information and the legacy RACH configuration information; and transmitting a random access (RA) preamble to the base station in the valid RO.

## Description

### [Technical Field]

The present disclosure relates to an enhanced communication technique, and more particularly, to a technique for a random access procedure in a subband full duplex (SBFD) subband.

### [Background Art]

A communication network (e.g., 5G communication network or 6G communication network) is being developed to provide enhanced communication services compared to the existing communication networks (e.g., long term evolution (LTE), LTE-Advanced (LTE-A), etc.). The 5G communication network (e.g., New Radio (NR) communication network) can support frequency bands both below 6 GHz and above 6 GHz. In other words, the 5G communication network can support one or both of frequency range 1 (FR1) and FR2 bands. Compared to the LTE communication network, the 5G communication network can support various communication services and scenarios. For example, usage scenarios of the 5G communication network may include enhanced Mobile BroadBand (eMBB), Ultra Reliable Low Latency Communication (URLLC), massive Machine Type Communication (mMTC), and the like.

The 6G communication network can support a variety of communication services and scenarios compared to the 5G communication network. The 6G communication network can meet the requirements of hyper-performance, hyper-bandwidth, hyper-space, hyper-precision, hyper-intelligence, and/or hyper-reliability. The 6G communication network can support diverse and wide frequency bands and can be applied to various usage scenarios such as terrestrial communication, non-terrestrial communication, sidelink communication, and the like.

Meanwhile, a communication network may support a subband full duplex (SBFD) operation. In the communication network supporting the SBFD operation, an uplink (UL) subband may be configured in a downlink (DL) period. The UL subband configured in the DL period may be used for a random access procedure. Some resources within the UL subband may not be available for the random access procedure. In the above-described situation, methods for efficiently performing the random access procedure using the UL subband may be required.

### [Disclosure]

### [Technical Problem]

The present disclosure is directed to providing a method and an apparatus for a random access procedure in a subband full duplex (SBFD) subband.

### [Technical Solution]

A method of a user equipment (UE), according to exemplary embodiments of the present disclosure for achieving the above-described objective, may comprise: receiving, from a base station, subband full duplex (SBFD) random access channel (RACH) configuration information and legacy RACH configuration information; determining a valid RACH occasion (RO) based on at least one of the SBFD RACH configuration information or the legacy RACH configuration information; and transmitting, to the base station, a random access (RA) preamble in the valid RO, wherein the SBFD RACH configuration information is configured for SBFD UEs supporting an SBFD operation, and the legacy RACH configuration information is configured for legacy UEs not supporting the SBFD operation.

An SBFD RO configured based on the SBFD RACH configuration information and a legacy RO configured based on the legacy RACH configuration information may each be determined to be a valid RO.

An SBFD RO configured based on the SBFD RACH configuration information may be determined to be a valid RO, and a legacy RO configured based on the legacy RACH configuration information may be determined to be an invalid RO.

One or more SBFD ROs belonging to SBFD resources among SBFD ROs configured based on the SBFD RACH configuration information may be determined to be valid ROs, and at least one SBFD RO not belonging to the SBFD resources among the SBFD ROs may be determined to be an invalid RO.

One or more SBFD ROs belonging to SBFD resources among SBFD ROs configured based on the SBFD RACH configuration information may be determined to be valid ROs, and at least one SBFD RO not belonging to the SBFD resources among the SBFD ROs may be determined to be a valid RO.

An SBFD RO not overlapping with a legacy RO configured based on the legacy RACH configuration information among SBFD ROs configured based on the SBFD RACH configuration information may be determined to be a valid RO, and an SBFD RO overlapping with the legacy RO among the SBFD ROs may be determined to be an invalid RO.

The SBFD RACH configuration information and the legacy RACH configuration information may each include at least one of *RACH-ConfigCommon*, *RACH-ConfigCommonTwoStepRA*, *RACH-ConfigDedicated*, *RACH-ConfigGeneric*, or *RACH-ConfigGenericTwoStepRA*.

At least one of the SBFD RACH configuration information or the legacy RACH configuration information may include at least one of a time offset or a frequency offset, and SBFD ROs based on the SBFD RACH configuration information may be determined by applying at least one of the time offset or the frequency offset to legacy ROs configured by the legacy RACH configuration information.

A mapping rule of synchronization signal blocks (SSBs) for SBFD ROs configured based on the SBFD RACH configuration information may be configured differently from a mapping rule of SSBs for legacy ROs configured based on the legacy RACH configuration information, and the mapping rule may be either a frequency-first mapping rule or a time-first mapping rule.

A method of a base station, according to exemplary embodiments of the present disclosure for achieving the above-described objective, may comprise: generating subband full duplex (SBFD) random access channel (RACH) configuration information for SBFD user equipments (UEs) supporting an SBFD operation; generating legacy RACH configuration information for legacy UEs not supporting the SBFD operation; transmitting the SBFD RACH configuration information and the legacy RACH configuration information to a UE; and receiving, from the UE, a random access (RA) preamble in at least one of an SBFD RACH occasion (RO) configured based on the SBFD RACH configuration information or a legacy RO configured based on the legacy RACH configuration information.

The SBFD RACH configuration information and the legacy RACH configuration information may each include at least one of *RACH-ConfigCommon*, *RACH-ConfigCommonTwoStepRA*, *RACH-ConfigDedicated*, *RACH-ConfigGeneric*, or *RACH-ConfigGenericTwoStepRA*, and the SBFD RACH configuration information is generated independently of the legacy RACH configuration information.

The SBFD RACH configuration information may be generated based on one or more parameters included in the legacy RACH configuration information.

At least one of the SBFD RACH configuration information or the legacy RACH configuration information may include at least one of a time offset or a frequency offset, and the SBFD RO may be determined by applying at least one of the time offset or the frequency offset to the legacy RO.

A mapping rule of synchronization signal blocks (SSBs) for SBFD ROs is configured differently from a mapping rule of SSBs for legacy ROs, and the mapping rule may be either a frequency-first mapping rule or a time-first mapping rule.

A user equipment (UE), according to exemplary embodiments of the present disclosure for achieving the above-described objective, may comprise at least one processor, and the at least one processor may cause the UE to perform: receiving, from a base station, subband full duplex (SBFD) random access channel (RACH) configuration information and legacy RACH configuration information; determining a valid RACH occasion (RO) based on at least one of the SBFD RACH configuration information or the legacy RACH configuration information; and transmitting, to the base station, a random access (RA) preamble in the valid RO, wherein the SBFD RACH configuration information is configured for SBFD UEs supporting an SBFD operation, and the legacy RACH configuration information is configured for legacy UEs not supporting the SBFD operation.

An SBFD RO configured based on the SBFD RACH configuration information and a legacy RO configured based on the legacy RACH configuration information may each be determined to be a valid RO.

An SBFD RO configured based on the SBFD RACH configuration information may be determined to be a valid RO, and a legacy RO configured based on the legacy RACH configuration information may be determined to be an invalid RO.

One or more SBFD ROs belonging to SBFD resources among SBFD ROs configured based on the SBFD RACH configuration information may be determined to be valid ROs, and at least one SBFD RO not belonging to the SBFD resources among the SBFD ROs may be determined to be an invalid RO.

One or more SBFD ROs belonging to SBFD resources among SBFD ROs configured based on the SBFD RACH configuration information may be determined to be valid ROs, and at least one SBFD RO not belonging to the SBFD resources among the SBFD ROs may be determined to be a valid RO.

An SBFD RO not overlapping with a legacy RO configured based on the legacy RACH configuration information among SBFD ROs configured based on the SBFD RACH configuration information may be determined to be a valid RO, and an SBFD RO overlapping with the legacy RO among the SBFD ROs may be determined to be an invalid RO.

### [Advantageous Effects]

According to the present disclosure, a base station may generate SBFD RACH configuration information and legacy RACH configuration information and may transmit the SBFD RACH configuration information and the legacy RACH configuration information to terminals. A terminal may determine a valid RO based on the SBFD RACH configuration information and/or the legacy RACH configuration information received from the base station and may transmit a random access (RA) preamble to the base station in the valid RO. Accordingly, an RA procedure can be efficiently performed in an SBFD resource (e.g., a UL subband), and performance of the communication system can be improved.

### [Description of Drawings]

FIG. 1 is a conceptual diagram illustrating exemplary embodiments of a communication system.
FIG. 2 is a block diagram illustrating exemplary embodiments of a communication node constituting a communication system.
FIG. 3 is a block diagram illustrating exemplary embodiments of communication nodes performing communication.
FIG. 4A is a block diagram illustrating exemplary embodiments of a transmission path.
FIG. 4B is a block diagram illustrating exemplary embodiments of a reception path.
FIG. 5 is a conceptual diagram illustrating exemplary embodiments of a system frame in a communication system.
FIG. 6 is a conceptual diagram illustrating exemplary embodiments of a subframe in a communication system.
FIG. 7 is a conceptual diagram illustrating exemplary embodiments of a slot in a communication system.
FIG. 8 is a conceptual diagram illustrating exemplary embodiments of a time-frequency resource in a communication system.
FIG. 9A is a conceptual diagram illustrating exemplary embodiments of a method of shifting legacy ROs in the frequency domain.
FIG. 9B is a conceptual diagram illustrating exemplary embodiments of a method of shifting legacy ROs in the time domain.
FIG. 10 is a conceptual diagram illustrating exemplary embodiments of a method of shifting legacy ROs in the time and frequency domains.
FIG. 11 is a sequence diagram illustrating an RA procedure in a communication system.

### [Mode for Invention]

Since the present disclosure may be modified in various ways and embodied in various forms, specific exemplary embodiments thereof are illustrated in the accompanying drawings and described in detail below. It should be understood, however, that it is not intended to limit the present disclosure to the specific exemplary embodiments but, on the contrary, the present disclosure is intended to cover all changes, equivalents, and substitutes falling within the spirit and scope of the present disclosure.

Relational terms such as "first" and "second" may be used for describing various elements, but the elements should not be limited by the terms. These terms are only used to distinguish one element from another. For example, a first component may be referred to as a second component without departing from the scope of the present disclosure, and the second component may also be similarly referred to as the first component. The term "and/or" means any one or a combination of a plurality of related and described items.

In the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

In the present disclosure, "(re)transmission" may refer to "transmission", "retransmission", or "transmission and retransmission", "(re)configuration" may refer to "configuration", "reconfiguration", or "configuration and reconfiguration", "(re)connection" may refer to "connection", "reconnection", or "connection and reconnection", and "(re)access" may refer to "access", "re-access", or "access and re-access".

When a certain component is referred to as being "coupled to" or "connected to" another component, it should be understood that the certain component is directly "coupled to" or "connected to" the other component or a further component may be disposed therebetween. In contrast, when a certain component is referred to as being "directly coupled to" or "directly connected to" another component, it will be understood that a further component is not disposed therebetween.

The terms used in the present disclosure are only used to describe specific exemplary embodiments, and are not intended to limit the present disclosure. The singular form includes the plural form unless the context clearly dictates otherwise. In the present disclosure, terms such as "comprise" or "have" are intended to designate that a feature, number, step, operation, component, part, or combination thereof described in the specification exists, but it should be understood that the terms do not preclude the presence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and defined in dictionaries should be construed as having meanings consistent with their meanings in the relevant art. In this description, unless defined clearly, terms are not necessarily construed as having formal meanings.

Hereinafter, exemplary embodiments of the present disclosure will be described in detail with reference to the accompanying drawings. In describing the disclosure, to facilitate the entire understanding of the disclosure, like numbers refer to like elements throughout the description of the figures and the repetitive description thereof will be omitted. The operations according to the exemplary embodiments explicitly described herein, as well as combinations of the exemplary embodiments, extensions of the exemplary embodiments, and/or variations of the exemplary embodiments, may be performed. Some operations may be omitted, and the order of the operations may be altered.

Even when a method (e.g., transmission or reception of a signal) to be performed at a first communication node among communication nodes is described in exemplary embodiments, a corresponding second communication node may perform a method (e.g., reception or transmission of the signal) corresponding to the method performed at the first communication node. In other words, when an operation of a user equipment (UE) is described, a base station corresponding thereto may perform an operation corresponding to the operation of the UE. Conversely, when an operation of a base station is described, a corresponding UE may perform an operation corresponding to the operation of the base station.

The base station may be referred to by various terms such as NodeB, evolved NodeB, next generation NodeB (gNodeB), gNB, device, apparatus, node, communication node, base transceiver station (BTS), radio remote head (RRH), transmission reception point (TRP), radio unit (RU), road side unit (RSU), radio transceiver, access point, access node, and the like. The user equipment (UE) may be referred to by various terms such as terminal, device, apparatus, node, communication node, end node, access terminal, mobile terminal, station, subscriber station, mobile station, portable subscriber station, on-board unit (OBU), and the like.

In the present disclosure, signaling may be one or a combination of two or more of higher-layer signaling, MAC signaling, and physical (PHY) signaling. A message used for higher-layer signaling may be referred to as a 'higher layer message' or 'higher-layer signaling message'. A message used for MAC signaling may be referred to as a 'MAC message' or 'MAC signaling message'. A message used for PHY signaling may be referred to as a 'PHY message' or 'PHY signaling message'. The higher-layer signaling may refer to an operation of transmitting and receiving system information (e.g., master information block (MIB), system information block (SIB)) and/or an RRC message. The MAC signaling may refer to an operation of transmitting and receiving a MAC control element (CE). The PHY signaling may refer to an operation of transmitting and receiving control information (e.g., downlink control information (DCI), uplink control information (UCI), or sidelink control information (SCI)).

In the present disclosure, "configuration for an operation (e.g., transmission operation)" may refer to signaling of configuration information (e.g., information elements, parameters) required for the operation and/or information indicating that the operation is to be performed. "configuration of information elements (e.g., parameters)" may refer to signaling of the information elements. In the present disclosure, "signal and/or channel" may refer to a signal, a channel, or both, and "signal" may be used to mean "signal and/or channel". In the present disclosure, the terms "time" and "time point" may be used interchangeably. Depending on the context, "time" may be interpreted as a time or a time point, and "time point" may be interpreted as a time point or a time.

A communication network to which exemplary embodiments are applied is not limited to that described below, and the exemplary embodiments may be applied to various communication networks (e.g., 4G communication networks, 5G communication networks, and/or 6G communication networks). Here, 'communication network' may be used interchangeably with a term 'communication system'.

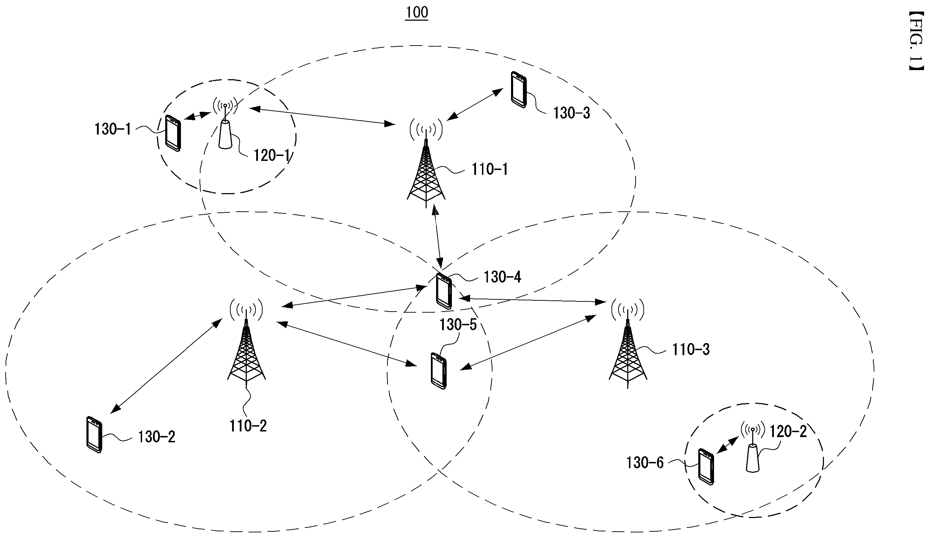

FIG. 1 is a conceptual diagram illustrating exemplary embodiments of a communication system.

As shown in FIG. 1, a communication system 100 may comprise a plurality of communication nodes 110-1, 110-2, 110-3, 120-1, 120-2, 130-1, 130-2, 130-3, 130-4, 130-5, and 130-6. In addition, the communication system 100 may further include a core network (e.g., a serving gateway (S-GW), a packet data network (PDN) gateway (P-GW), a mobility management entity (MME)). When the communication system 100 is a 5G communication system (e.g., NR system), the core network may include an access and mobility management function (AMF), a user plane function (UPF), a session management function (SMF), and the like.

The plurality of communication nodes 110 to 130 may support communication protocols (e.g., LTE communication protocol, LTE-A communication protocol, NR communication protocol, etc.) specified in the 3^{rd} generation partnership project (3GPP) standards. The plurality of communication nodes 110 to 130 may support a code division multiple access (CDMA) technique, a wideband CDMA (WCDMA) technique, a time division multiple access (TDMA) technique, a frequency division multiple access (FDMA) technique, an orthogonal frequency division multiplexing (OFDM) technique, a filtered OFDM technique, a cyclic prefix OFDM (CP-OFDM) technique, a discrete Fourier transform spread OFDM (DFT-s-OFDM) technique, an orthogonal frequency division multiple access (OFDMA) technique, a single carrier FDMA (SC-FDMA) technique, a non-orthogonal multiple access (NOMA) technique, a generalized frequency division multiplexing (GFDM) technique, a filter bank multi-carrier (FBMC) technique, a universal filtered multi-carrier (UFMC) technique, a space division multiple access (SDMA) technique, or the like. Each of the plurality of communication nodes may have the following structure.

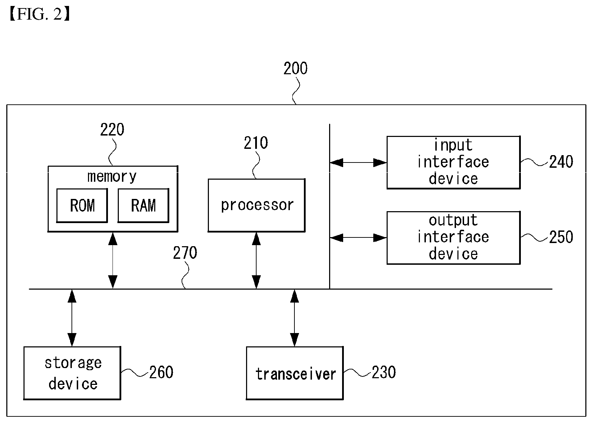

FIG. 2 is a block diagram illustrating exemplary embodiments of a communication node constituting a communication system.

As shown in FIG. 2, a communication node 200 may include at least one processor 210, a memory 220, and a transceiver 230 configured to perform communication via the network. Also, the communication node 200 may further include an input interface device 240, an output interface device 250, a storage device 260, and the like. Each component included in the communication node 200 may communicate with each other through a bus 270.

The processor 210 may execute a program stored in at least one of the memory 220 and the storage device 260. The processor 210 may refer to a central processing unit (CPU), a graphics processing unit (GPU), or a dedicated processor on which methods in accordance with embodiments of the present disclosure are performed. Each of the memory 220 and the storage device 260 may include at least one of a volatile storage medium and a non-volatile storage medium. For example, the memory 220 may comprise at least one of read-only memory (ROM) and random access memory (RAM).

Referring again to FIG. 1, the communication system 100 may include a plurality of base stations 110-1, 110-2, 110-3, 120-1, and 120-2, and a plurality of terminals 130-1, 130-2, 130-3, 130-4, 130-5, and 130-6. Each of the first base station 110-1, the second base station 110-2, and the third base station 110-3 may form a macro cell, and each of the fourth base station 120-1 and the fifth base station 120-2 may form a small cell. The fourth base station 120-1, the third terminal 130-3, and the fourth terminal 130-4 may be located within cell coverage of the first base station 110-1. Also, the second terminal 130-2, the fourth terminal 130-4, and the fifth terminal 130-5 may be located within cell coverage of the second base station 110-2. Also, the fifth base station 120-2, the fourth terminal 130-4, the fifth terminal 130-5, and the sixth terminal 130-6 may be located within cell coverage of the third base station 110-3. Also, the first terminal 130-1 may be located within cell coverage of the fourth base station 120-1, and the sixth terminal 130-6 may be located within coverage of the fifth base station 120-2.

Here, each of the plurality of base stations 110-1, 110-2, 110-3, 120-1, and 120-2 may refer to a NodeB, evolved NodeB (eNB), gNB, advanced base station (ABS), high-reliability base station (HR-BS), base transceiver station (BTS), radio base station, radio transceiver, access point, access node, radio access station (RAS), mobile multihop relay-base station (MMR-BS), relay station (RS), advanced relay station (ARS), high reliability-relay station (HR-RS), home NodeB (HNB), home eNodeB (HeNB), road side unit (RSU), radio remote head (RRH), transmission point (TP), transmission and reception point (TRP), or the like.

Each of the plurality of terminals 130-1, 130-2, 130-3, 130-4, 130-5, and 130-6 may refer to a user equipment (UE), terminal equipment (TE), advanced mobile station (AMS), high reliability-mobile station (HR-MS), terminal, access terminal, mobile terminal, station, subscriber station, mobile station, portable subscriber station, node, device, on-board unit (OBU), or the like.

Meanwhile, each of the plurality of base stations 110-1, 110-2, 110-3, 120-1, and 120-2 may operate in the same frequency band or in different frequency bands. The plurality of base stations 110-1, 110-2, 110-3, 120-1, and 120-2 may be connected to each other via an ideal backhaul or a non-ideal backhaul, and exchange information with each other via the ideal or non-ideal backhaul. Also, each of the plurality of base stations 110-1, 110-2, 110-3, 120-1, and 120-2 may be connected to the core network through the ideal or non-ideal backhaul. Each of the plurality of base stations 110-1, 110-2, 110-3, 120-1, and 120-2 may transmit a signal received from the core network to the corresponding terminal 130-1, 130-2, 130-3, 130-4, 130-5, or 130-6, and transmit a signal received from the corresponding terminal 130-1, 130-2, 130-3, 130-4, 130-5, or 130-6 to the core network.

In addition, each of the plurality of base stations 110-1, 110-2, 110-3, 120-1, and 120-2 may support multi-input multi-output (MIMO) transmission (e.g., a single-user MIMO (SU-MIMO), multi-user MIMO (MU-MIMO), massive MIMO, or the like), coordinated multipoint (CoMP) transmission, carrier aggregation (CA) transmission, transmission in an unlicensed band, sidelink communication (e.g., device-to-device (D2D) communication, proximity services (ProSe)), Internet of Things (IoT) communication, dual connectivity (DC), and/or the like. Here, each of the plurality of terminals 130-1, 130-2, 130-3, 130-4, 130-5, and 130-6 may perform operations corresponding to the operations of the plurality of base stations 110-1, 110-2, 110-3, 120-1, and 120-2, and operations supported by the plurality of base stations 110-1, 110-2, 110-3, 120-1, and 120-2. For example, the second base station 110-2 may transmit a signal to the fourth terminal 130-4 using SU-MIMO, and the fourth terminal 130-4 may receive the signal from the second base station 110-2 using SU-MIMO. Alternatively, the second base station 110-2 may transmit a signal to the fourth terminal 130-4 and fifth terminal 130-5 using MU-MIMO, and the fourth terminal 130-4 and fifth terminal 130-5 may receive the signal from the second base station 110-2 using MU-MIMO.

The first base station 110-1, the second base station 110-2, and the third base station 110-3 may transmit a signal to the fourth terminal 130-4 using CoMP, and the fourth terminal 130-4 may receive the signal from the first base station 110-1, the second base station 110-2, and the third base station 110-3 using CoMP. Also, each of the plurality of base stations 110-1, 110-2, 110-3, 120-1, and 120-2 may exchange signals with the corresponding terminal 130-1, 130-2, 130-3, 130-4, 130-5, or 130-6 which belongs to its cell coverages using CA. Each of the base stations 110-1, 110-2, and 110-3 may control sidelink communications between the fourth terminal 130-4 and the fifth terminal 130-5, and thus the fourth terminal 130-4 and the fifth terminal 130-5 may perform the sidelink communications under control of the second base station 110-2 and the third base station 110-3, respectively.

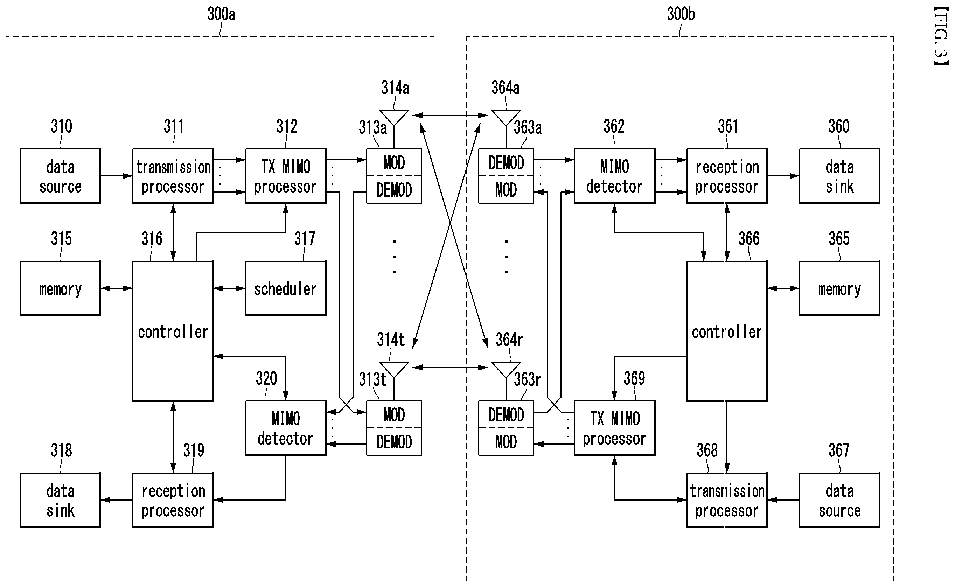

Meanwhile, communication nodes performing communications in the communication network may be configured as follows. A communication node shown in FIG. 3 may be a specific exemplary embodiment of the communication node shown in FIG. 2.

FIG. 3 is a block diagram illustrating exemplary embodiments of communication nodes performing communication.

As shown in FIG. 3, each of a first communication node 300a and a second communication node 300b may be a base station or UE. The first communication node 300a may transmit a signal to the second communication node 300b. A transmission processor 311 included in the first communication node 300a may receive data (e.g., data unit) from a data source 310. The transmission processor 311 may receive control information from a controller 316. The control information may include at least one of system information, RRC configuration information (e.g., information configured by RRC signaling), MAC control information (e.g., MAC CE), or PHY control information (e.g., DCI or SCI).

The transmission processor 311 may generate data symbol(s) by performing processing operations (e.g., encoding operation, symbol mapping operation, etc.) on the data. The transmission processor 311 may generate control symbol(s) by performing processing operations (e.g., encoding operation, symbol mapping operation, etc.) on the control information. In addition, the transmission processor 311 may generate synchronization/reference symbol(s) for synchronization signals and/or reference signals.

A Tx MIMO processor 312 may perform spatial processing operations (e.g., precoding operations) on the data symbol(s), control symbol(s), and/or synchronization/reference symbol(s). An output (e.g., a symbol stream) of the Tx MIMO processor 312 may be provided to modulators (MODs) included in transceivers 313a to 313t. Each modulator may generate modulation symbols by performing processing operations on the symbol stream, and may generate signals by performing additional processing operations (e.g., analog conversion operation, amplification operation, filtering operation, up-conversion operation, etc.) on the modulation symbols. The signals generated by the modulators of the transceivers 313a to 313t may be transmitted through antennas 314a to 314t.

The signals transmitted by the first communication node 300a may be received at antennas 364a to 364r of the second communication node 300b. The signals received at the antennas 364a to 364r may be provided to demodulators (DEMODs) included in transceivers 363a to 363r. Each demodulator may obtain samples by performing processing operations (e.g., filtering operation, amplification operation, down-conversion operation, digital conversion operation, etc.) on the signals. Each demodulator may perform additional processing operations on the samples to obtain symbols. A MIMO detector 362 may perform MIMO detection operations on the symbols. A reception processor 361 may perform processing operations (e.g., de-interleaving operation, decoding operation, etc.) on the symbols. An output of the reception processor 361 may be provided to a data sink 360 and a controller 366. For example, the data may be provided to the data sink 360 and the control information may be provided to the controller 366.

On the other hand, the second communication node 300b may transmit signals to the first communication node 300a. A transmission processor 368 included in the second communication node 300b may receive data (e.g., data unit) from a data source 367 and perform processing operations on the data to generate data symbol(s). The transmission processor 368 may receive control information from the controller 366 and perform processing operations on the control information to generate control symbol(s). In addition, the transmission processor 368 may generate reference symbol(s) by performing processing operations on reference signals.

A Tx MIMO processor 369 may perform spatial processing operations (e.g., precoding operations) on the data symbol(s), control symbol(s), and/or reference symbol(s). An output (e.g., symbol stream) of the Tx MIMO processor 369 may be provided to modulators (MODs) included in the transceivers 363a to 363t. Each modulator may generate modulation symbols by performing processing operations on the symbol stream, and may generate signals by performing additional processing operations (e.g., analog conversion operation, amplification operation, filtering operation, up-conversion operation) on the modulation symbols. The signals generated by the modulators of the transceivers 363a to 363t may be transmitted through the antennas 364a to 364t.

The signals transmitted by the second communication node 300b may be received at the antennas 314a to 314r of the first communication node 300a. The signals received at the antennas 314a to 314r may be provided to demodulators (DEMODs) included in the transceivers 313a to 313r. Each demodulator may obtain samples by performing processing operations (e.g., filtering operation, amplification operation, down-conversion operation, digital conversion operation) on the signals. The demodulator may perform additional processing operations on the samples to obtain symbols. A MIMO detector 320 may perform MIMO detection operations on the symbols. The reception processor 319 may perform processing operations (e.g., de-interleaving operation, decoding operation, etc.) on the symbols. An output of the reception processor 319 may be provided to a data sink 318 and the controller 316. For example, the data may be provided to the data sink 318 and the control information may be provided to the controller 316.

Memories 315 and 365 may store the data, control information, and/or program codes. A scheduler 317 may perform scheduling operations for communication. The processors 311, 312, 319, 361, 368, and 369 and the controllers 316 and 366 shown in FIG. 3 may be the processor 210 shown in FIG. 2, and may be used to perform methods described in the present disclosure.

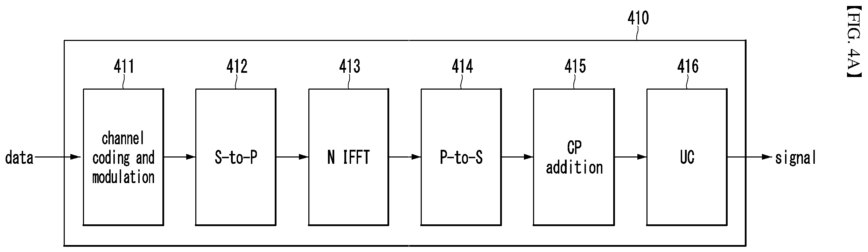

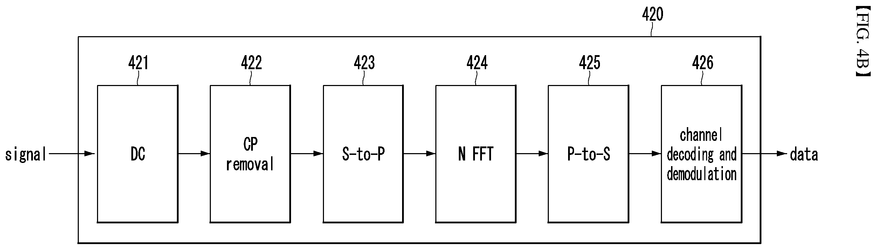

FIG. 4A is a block diagram illustrating exemplary embodiments of a transmission path, and FIG. 4B is a block diagram illustrating exemplary embodiments of a reception path.

As shown in FIGS. 4A and 4B, a transmission path 410 may be implemented in a communication node that transmits signals, and a reception path 420 may be implemented in a communication node that receives signals. The transmission path 410 may include a channel coding and modulation block 411, a serial-to-parallel (S-to-P) block 412, an N-point inverse fast Fourier transform (N-point IFFT) block 413, a parallel-to-serial (P-to-S) block 414, a cyclic prefix (CP) addition block 415, and an up-converter (UC) 416. The reception path 420 may include a down-converter (DC) 421, a CP removal block 422, an S-to-P block 423, an N-point FFT block 424, a P-to-S block 425, and a channel decoding and demodulation block 426. Here, N may be a natural number.

In the transmission path 410, information bits may be input to the channel coding and modulation block 411. The channel coding and modulation block 411 may perform a coding operation (e.g., low-density parity check (LDPC) coding operation, polar coding operation, etc.) and a modulation operation (e.g., Quadrature Phase Shift Keying (QPSK), Quadrature Amplitude Modulation (QAM), etc.) on the information bits. An output of the channel coding and modulation block 411 may be a sequence of modulation symbols.

The S-to-P block 412 may convert frequency domain modulation symbols into parallel symbol streams to generate N parallel symbol streams. N may be the IFFT size or the FFT size. The N-point IFFT block 413 may generate time domain signals by performing an IFFT operation on the N parallel symbol streams. The P-to-S block 414 may convert the output (e.g., parallel signals) of the N-point IFFT block 413 to serial signals to generate the serial signals.

The CP addition block 415 may insert a CP into the signals. The UC 416 may up-convert a frequency of the output of the CP addition block 415 to a radio frequency (RF). Further, the output of the CP addition block 415 may be filtered in baseband before the up-conversion.

The signal transmitted from the transmission path 410 may be input to the reception path 420. Operations in the reception path 420 may be reverse operations for the operations in the transmission path 410. The DC 421 may down-convert a frequency of the received signals to a baseband frequency. The CP removal block 422 may remove a CP from the signals. The output of the CP removal block 422 may be serial signals. The S-to-P block 423 may convert the serial signals into parallel signals. The N-point FFT block 424 may generate N parallel signals by performing an FFT algorithm. The P-to-S block 425 may convert the parallel signals into a sequence of modulation symbols. The channel decoding and demodulation block 426 may perform a demodulation operation on the modulation symbols and may restore data by performing a decoding operation on a result of the demodulation operation.

In FIGS. 4A and 4B, discrete Fourier transform (DFT) and inverse DFT (IDFT) may be used instead of FFT and IFFT. Each of the blocks (e.g., components) in FIGS. 4A and 4B may be implemented by at least one of hardware, software, or firmware. For example, some blocks in FIGS. 4A and 4B may be implemented by software, and other blocks may be implemented by hardware or a combination of hardware and software. In FIGS. 4A and 4B, one block may be subdivided into a plurality of blocks, a plurality of blocks may be integrated into one block, some blocks may be omitted, and blocks supporting other functions may be added.

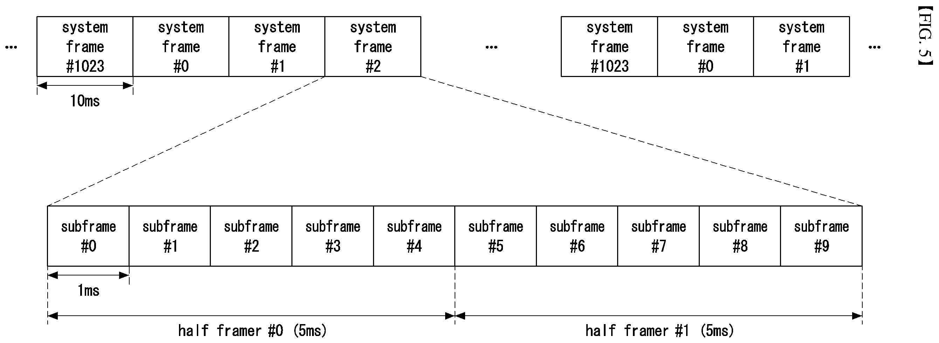

FIG. 5 is a conceptual diagram illustrating exemplary embodiments of a system frame in a communication system.

As shown in FIG. 5, time resources in the communication system may be divided on a frame basis. For example, system frames of the communication system may be configured continuously in the time domain. The length of the system frame may be 10 milliseconds (ms). A system frame number (SFN) may be set to one of #0 to #1023. In this case, 1024 system frames may be repeated in the time domain of the communication system. For example, an SFN of a system frame following the system frame #1023 may be #0.

One system frame may include two half frames. The length of one half frame may be 5 ms. A half frame located at a starting region of the system frame may be referred to as 'half frame #0', and a half frame located at an ending region of the system frame may be referred to as 'half frame #1'. One system frame may include 10 subframes. The length of one subframe may be 1 ms. 10 subframes within one system frame may be referred to as subframes #0-#9.

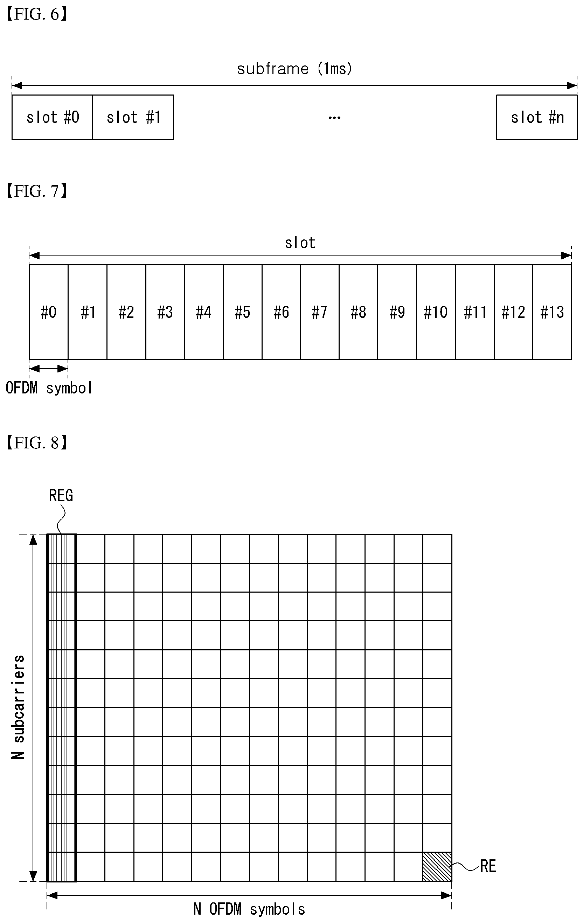

FIG. 6 is a conceptual diagram illustrating exemplary embodiments of a subframe in a communication system.

As shown in FIG. 6, one subframe may include n slots, and n may be a natural number. Accordingly, one subframe may consist of one or more slots.

FIG. 7 is a conceptual diagram illustrating exemplary embodiments of a slot in a communication system.

As shown in FIG. 7, one slot may include one or more symbols. For example, one slot shown in FIG. 7 may include 14 symbols. The length of a slot may vary according to the number of symbols included in a slot and the length of symbol. Alternatively, the length of a slot may vary according to a numerology.

The numerology applied to physical signals and channels in a communication system may be variable. The numerology may be adjusted to meet various technical requirements of the communication system. In a communication system where a cyclic prefix (CP)-based OFDM waveform technology is applied, the numerology may include a subcarrier spacing and a CP length (or CP type). Table 1 may illustrate a first exemplary embodiment of a method for configuring numerologies for a CP-OFDM-based communication system. Depending on a frequency band in which the communication system operates, at least some of the numerologies in Table 1 may be supported. Additionally, the communication system may support numerologies not listed in Table 1.

**[Table 1]**

| Subcarrier spacing | 15 kHz | 30 kHz | 60 kHz | 120 kHz | 240 kHz | 480 kHz |
|---|---|---|---|---|---|---|
| OFDM symbol length [µs] | 66.7 | 33.3 | 16.7 | 8.3 | 4.2 | 2.1 |
| CP length [µs] | 4.76 | 2.38 | 1.19 | 0.60 | 0.30 | 0.15 |
| Number of OFDM symbols within 1ms | 14 | 28 | 56 | 112 | 224 | 448 |

When a subcarrier spacing is 15 kHz (e.g., µ = 0), the length of a slot may be 1 ms. In this case, one system frame may include 10 slots. When a subcarrier spacing is 30 kHz (e.g., µ = 1), the length of a slot may be 0.5 ms. In this case, one system frame may include 20 slots.

When a subcarrier spacing is 60 kHz (e.g., µ = 2), the length of a slot may be 0.25 ms. In this case, one system frame may include 40 slots. When a subcarrier spacing is 120 kHz (e.g., µ = 3), the length of a slot may be 0.125 ms. In this case, one system frame may include 80 slots. When a subcarrier spacing is 240 kHz (e.g., µ = 4), the length of a slot may be 0.0625 ms. In this case, one system frame may include 160 slots.

The symbol may be configured as a downlink (DL) symbol, a flexible (FL) symbol, or an uplink (UL) symbol. A slot composed of only DL symbols may be referred to as a 'DL slot', a slot composed of only FL symbols may be referred to as a 'FL slot', and a slot composed of only UL symbols may be referred to as a 'UL slot'.

A slot format may be semi-statically configured through higher-layer signaling (e.g., RRC signaling). Information indicating a semi-static slot format may be included in system information, and the semi-static slot format may be configured cell-specifically. Additionally, a semi-static slot format may be further configured for each terminal through terminal-specific higher-layer signaling (e.g., RRC signaling). Flexible symbols in the cell-specific slot format may be overridden to be downlink symbols or uplink symbols through terminal-specific higher-layer signaling. Furthermore, a slot format may be dynamically indicated through physical layer signaling (e.g., slot format indicator (SFI) included in DCI). The semi-statically configured slot format may be overridden by the dynamically indicated slot format. For example, flexible symbols configured semi-statically may be overridden to be downlink symbols or uplink symbols by the SFI.

Reference signals may include Channel State Information-Reference Signal (CSI-RS), Sounding Reference Signal (SRS), Demodulation-Reference Signal (DM-RS), and Phase Tracking-Reference Signal (PT-RS). Channels may include Physical Broadcast Channel (PBCH), Physical Downlink Control Channel (PDCCH), Physical Downlink Shared Channel (PDSCH), Physical Uplink Control Channel (PUCCH), Physical Uplink Shared Channel (PUSCH), Physical Sidelink Control Channel (PSCCH), and Physical Sidelink Shared Channel (PSSCH). In the present disclosure, a control channel may refer to PDCCH, PUCCH, or PSCCH, and a data channel may refer to PDSCH, PUSCH, or PSSCH.

FIG. 8 is a conceptual diagram illustrating exemplary embodiments of a time-frequency resource in a communication system.

As shown in FIG. 8, a resource composed of one OFDM symbol on the time domain and one subcarrier on the frequency domain may be defined as a 'resource element (RE)'. A resource composed of one OFDM symbol on the time domain and K subcarriers on the frequency domain may be defined as a 'resource element group (REG)'. The REG may include K REs. The REG may be used as a basic unit of resource allocation in the frequency domain. K may be a natural number. For example, K may be 12. N may be a natural number. In the slot shown in FIG. 7, N may be 14. N OFDM symbols may be used as a basic unit of resource allocation in the time domain.

In the present disclosure, an RB may refer to a common RB (CRB). Alternatively, an RB may refer to a physical RB (PRB) or a virtual RB (VRB). In a communication system, a CRB may refer to an RB that constitutes a set of contiguous RBs (e.g., a common RB grid) based on a reference frequency (e.g., point A). A carrier and/or bandwidth part may be mapped onto the common RB grid. That is, a carrier and/or bandwidth part may be configured with CRB(s). The RBs or CRBs that constitute a bandwidth part may be referred to as PRBs, and a CRB index may be appropriately converted to a PRB index within the bandwidth part.

Downlink data may be transmitted through a PDSCH. A base station may transmit configuration information (e.g., scheduling information) for the PDSCH to a terminal through a PDCCH. The terminal may obtain the configuration information of the PDSCH by receiving the PDCCH (e.g., Downlink Control Information (DCI)). For example, the configuration information of the PDSCH may include a Modulation and Coding Scheme (MCS) used for transmission/reception of the PDSCH, time resource information of the PDSCH, frequency resource information of the PDSCH, and feedback resource information for the PDSCH. The PDSCH may refer to a radio resource where the downlink data is transmitted and received. Alternatively, the PDSCH may refer to the downlink data itself. The PDCCH may refer to a radio resource where the downlink control information (e.g., DCI) is transmitted and received. Alternatively, the PDCCH may refer to the downlink control information itself.

The terminal may perform a monitoring operation for the PDCCH to receive the PDSCH transmitted from the base station. The base station may notify the terminal of configuration information for the PDCCH monitoring operation using a higher-layer message (e.g., Radio Resource Control (RRC) message). The configuration information for the PDCCH monitoring operation may include Control Resource Set (CORESET) information and search space information.

The CORESET information may include PDCCH DMRS information, PDCCH precoding information, and PDCCH occasion information, and the like. A PDCCH DMRS may be a DMRS used for demodulating a PDCCH. A PDCCH occasion refers to a region where a PDCCH may exist, meaning it is a region where DCI can be transmitted. A PDCCH occasion may also be referred to as a PDCCH candidate. The PDCCH occasion information may include time resource information and frequency resource information for the PDCCH occasion. In the time domain, the length of the PDCCH occasion may be indicated in symbol units. In the frequency domain, the size of the PDCCH occasion can be indicated in RB units (e.g., in PRB units or CRB units).

The search space information may include a CORESET identifier (ID) associated with a search space, a periodicity of PDCCH monitoring, and/or an offset of PDCCH monitoring. The periodicity and offset of PDCCH monitoring may each be indicated in slot units. Additionally, the search space information may further include an index of a symbol where the PDCCH monitoring operation starts.

The base station may configure Bandwidth Part(s) (BWP(s)) for downlink communication. The BWP(s) may be configured differently for each terminal. The base station may notify the terminal of BWP configuration information using higher-layer signaling. The higher-layer signaling may refer to a transmission operation of system information and/or a transmission operation of RRC message(s). The number of BWPs configured for a single terminal may be one or more. The terminal may receive the BWP configuration information from the base station and identify the configured BWP(s) based on the received configuration information. When multiple BWPs are configured for downlink communication, the base station may activate one or more BWPs from among the multiple BWPs. The base station may transmit configuration information of the activated BWP(s) to the terminal using at least one of higher-layer signaling, Medium Access Control (MAC) Control Element (CE), or DCI. The base station may perform downlink communication using the activated BWP(s). The terminal may identify the activated BWP(s) by receiving the configuration information from the base station and perform downlink reception operations on the activated BWP(s).

Meanwhile, a communication system (e.g., an NR communication system, a 5G communication system, or a 6G communication system) may support usage scenarios such as enhanced Mobile BroadBand (eMBB), Ultra Reliable Low Latency Communication (URLLC), and massive Machine Type Communication (mMTC). A communication system (e.g., a communication network) may support a subband full-duplex (SBFD) operation.

A communication system may support a time division duplexing (TDD) scheme. In a communication system supporting the TDD scheme (hereinafter, referred to as a "TDD communication system"), downlink (DL) symbol(s) and uplink (UL) symbol(s) may be configured in different time resources within one carrier. DL symbols and UL symbols may be associated with coverage and/or latency. In the TDD communication system, a base station may use resources more efficiently than in a frequency division duplexing (FDD) scheme in consideration of various use cases. A resource scheduling operation of a base station in the TDD communication system may be important. For an enhanced TDD operation, an SBFD operation (e.g., an SBFD scheme) may be supported. When the SBFD operation is supported in the TDD communication system, DL communication (e.g., a transmission and reception operation of a DL signal) and UL communication (e.g., a transmission and reception operation of a UL signal) may be simultaneously performed within the same time resource. For example, within the same time resource, some subbands may be DL subbands, and other subbands may be UL subbands and/or FL subbands. In the present disclosure, a DL signal may be interpreted as a DL signal, a DL channel, or "a DL signal and a DL channel" depending on context. In the present disclosure, a UL signal may be interpreted as a UL signal, a UL channel, or "a UL signal and a UL channel" depending on context.

A symbol to which the SBFD operation is applied may be referred to as an SBFD symbol. A symbol to which the SBFD operation is not applied may be referred to as an non-SBFD (N-SBFD) symbol. The N-SBFD symbol may be a DL symbol, a UL symbol, or an FL symbol. In the SBFD symbol, a terminal may perform DL communication and UL communication. In other words, the terminal may perform a full-duplex operation in the SBFD symbol. In the N-SBFD symbol, the terminal may perform one of DL communication and UL communication. In other words, the terminal may perform a half-duplex operation in the N-SBFD symbol. The SBFD symbol may be a symbol including a subband in which the SBFD operation is performed. A subband for SBFD may be referred to or interpreted as a UL subband. The UL subband may exist (e.g., be configured) in a symbol in which a synchronization signal block (SSB) is transmitted.

Resources for the SBFD operation (e.g., time resources and/or frequency resources) may be configured in a semi-static manner. In other words, a configuration for SBFD resources may be a semi-static configuration. "A configuration of SBFD resources being a semi-static configuration" may mean "SBFD resources being configured by semi-static signaling (e.g., system information or an RRC message)". In the present disclosure, SBFD resources may refer to time resources and/or frequency resources for the SBFD operation. A UL subband for SBFD may be an SBFD resource. Alternatively, SBFD resources may be configured in a dynamic manner. "A configuration of SBFD resources being a dynamic configuration" may mean "SBFD resources being configured by dynamic signaling (e.g., MAC CE, DCI, SCI) ".

SBFD resources (e.g., a UL subband and/or an SBFD symbol) may be configured within DL resources and/or flexible (FL) resources configured by TDD-UL-DL configuration common information (e.g., *TDD-UL-DL-ConfigCommon*). A transition point from an N-SBFD symbol to an SBFD symbol in the time domain may be limited to one. A transition point from an SBFD symbol to an N-SBFD symbol in the time domain may be limited to one. Regarding resource configuration of a subband for SBFD, it may be preferable for a terminal to recognize resource configuration information of the subband for SBFD in advance.

The TDD-UL-DL configuration common information may be used to configure, in the time domain, a pattern (e.g., *TDD-UL-DL-Pattern*) for DL resources and/or UL resources of the TDD communication system. A pattern for DL resources and/or UL resources may be referred to as a UL/DL pattern. The UL/DL pattern may be changed according to an environment of the communication system (e.g., the TDD communication system). Up to two UL/DL patterns may be configured for a terminal. The TDD-UL-DL configuration common information may be a cell-specific parameter (e.g., cell-specific configuration information). A base station may change a configuration (e.g., a transmission direction, a type) for symbol(s) on a per-terminal basis with reference to a specific slot within a preconfigured UL/DL pattern. A slot in which a symbol configuration (e.g., a symbol direction, a symbol type) is changeable may be a slot configured as an FL resource by the TDD-UL-DL configuration common information. A symbol direction (e.g., a symbol transmission direction) and/or a symbol type may be DL, UL, or FL. RRC signaling used to change a configuration of an FL slot (e.g., an FL resource) may be TDD-UL-DL configuration dedicated information (e.g., *TDD-UL-DL-ConfigDedicated*). Table 2 may be TDD-UL-DL configuration common information, and Table 3 and Table 4 may be TDD-UL-DL configuration dedicated information.

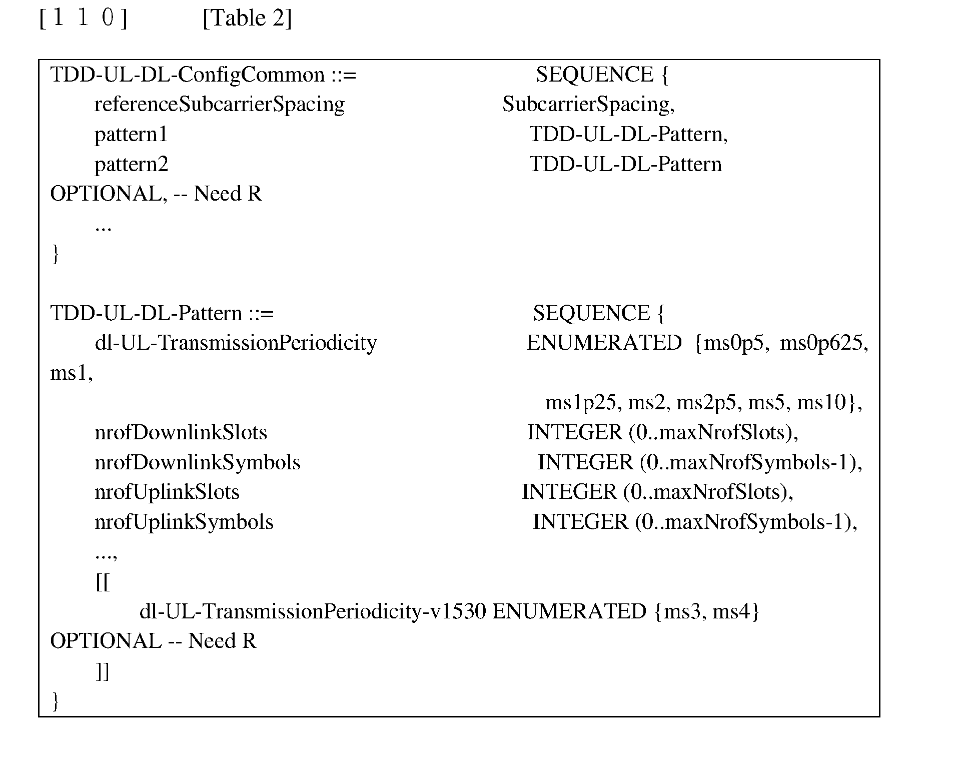

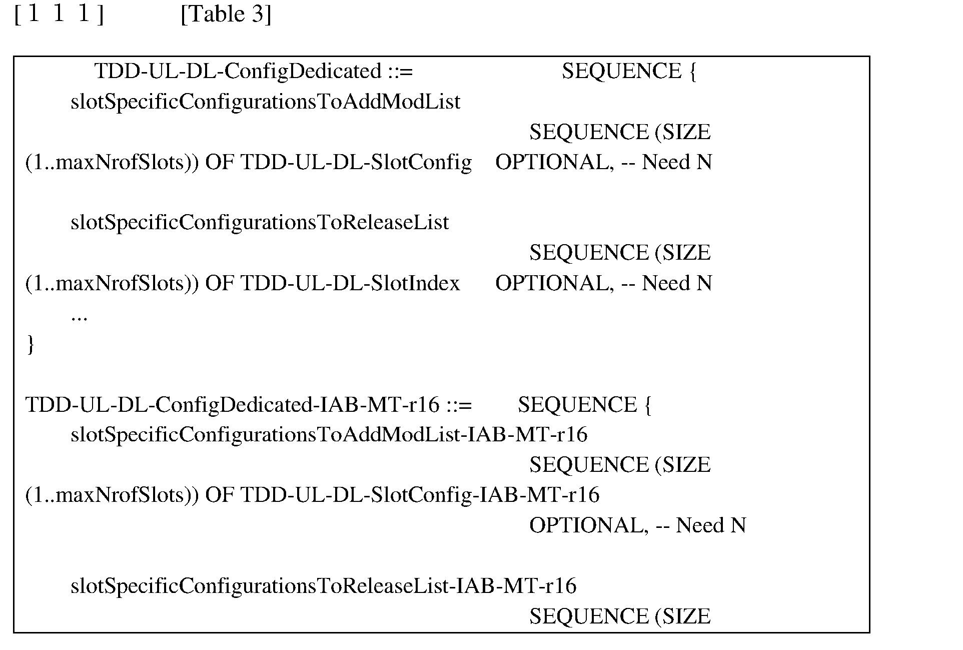

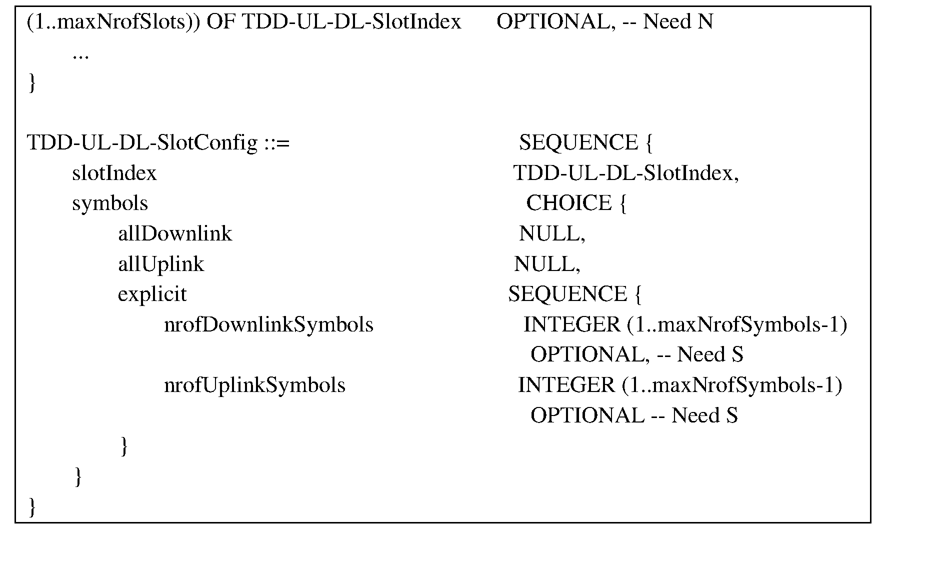

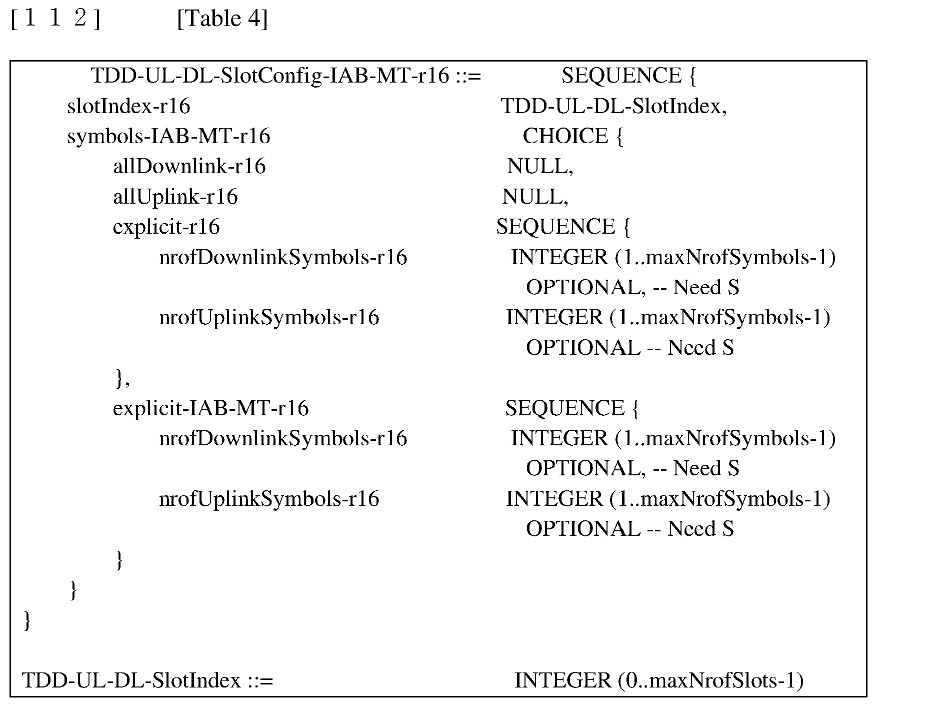

A UL/DL pattern configured by the TDD-UL-DL configuration common information may be repeated according to a specific periodicity (e.g., *dl-UL-TransmissionPeriodicity*). A front region of a time duration to which the UL/DL pattern is applied may be configured as DL resources. A rear region of the time duration to which the UL/DL pattern is applied may be configured as UL resources. Resources that are not configured as DL resources or UL resources in the time duration to which the UL/DL pattern is applied may be configured as FL resources. The periodicity of the UL/DL pattern may vary depending on a reference numerology. For switching (e.g., transition) from DL resources (e.g., DL symbols/slots) to UL resources (e.g., UL symbols/slots), a guard time (e.g., a guard gap) may be required. Since a propagation delay of a DL signal causes interference to UL resources, the guard time may be required for switching from DL resources to UL resources. A separate guard time may not be required for switching from UL resources to DL resources. Since a UL signal is transmitted based on a timing advance command (TAC) indicated by the base station, a guard time for switching from UL resources to DL resources may not be required.

TDD-UL-DL configuration common information (e.g., *TDD-UL-DL-ConfigCommon*) may be referred to as "TDD common" or "TDD common information". TDD-UL-DL configuration dedicated information (e.g., *TDD-UL-DL-ConfigDedicated*) may be referred to as "TDD dedicated" or "TDD dedicated information". A UL subband may refer to a subband for SBFD. DL symbol(s) and/or DL slot(s) may be referred to as a DL region (or DL resource). UL symbol(s) and/or UL slot(s) may be referred to as a UL region (or UL resource). FL symbol(s) and/or FL slot(s) may be referred to as an FL region (or FL resource). A terminal supporting (e.g., being aware of) an SBFD operation may be referred to as an SBFD terminal or an SBFD UE. A terminal not supporting (e.g., being unaware of) an SBFD operation may be referred to as an N-SBFD terminal or an N-SBFD UE. An N-SBFD terminal may be a legacy terminal (e.g., a legacy UE). In the present disclosure, a terminal may be interpreted as an SBFD terminal and/or an N-SBFD terminal depending on context. Legacy configuration (e.g., legacy information, legacy configuration information) may be information for an N-SBFD terminal.

A random access procedure (e.g., random access channel (RACH) transmission, physical random access channel (PRACH) transmission) may be performed in a UL subband (e.g., an SBFD resource). The UL subband may belong to an SBFD resource. A UL subband may exist within a DL region and/or an FL region configured by TDD common. A UL subband may be configured within a DL region (e.g., a DL time resource). A terminal may perform PRACH transmission within the UL subband. In the present disclosure, PRACH transmission methods for an SBFD terminal will be described.

### • Validity rule and RO configuration for SBFD UEs

A UL subband may have limited frequency resources. RACH configuration information for an RA procedure in a UL subband may be configured considering the limited frequency resources of the UL subband. For example, information indicating the number of PRACH occasions multiplexed in the frequency domain (e.g., *msg1-FDM* and *msgA-RO-FDM*) may be configured considering the frequency resources of the UL subband, and information indicating the number of SSBs per RACH occasion (e.g., *ssb-perRACH-Occasion* and *ssb-perRACH-OccasionTwoStep*) may be configured considering the frequency resources of the UL subband.

RACH configuration information for N-SBFD resources (e.g., RACH configuration) may be referred to as legacy RACH configuration information (e.g., legacy RACH configuration). The legacy RACH configuration information may be referred to as first RACH configuration information for convenience. RACH configuration information for UL subbands (e.g., SBFD resources) may be referred to as SBFD RACH configuration information (e.g., SBFD RACH configuration). The SBFD RACH configuration information may be referred to as second RACH configuration information or additional RACH configuration information for convenience.

The SBFD RACH configuration information may be configured independently of the legacy RACH configuration information. The SBFD RACH configuration information and the legacy RACH configuration information may each include at least one of *RACH-ConfigCommon*, *RACH-ConfigCommonTwoStepRA*, *RACH-ConfigDedicated*, *RACH-ConfigGeneric*, or *RACH-ConfigGenericTwoStepRA*. Some or all parameters included in the legacy RACH configuration information may be reconfigured for an RA procedure in a UL subband, and the reconfigured parameters may be included in the SBFD RACH configuration information. In other words, parameter(s) included in the SBFD RACH configuration information may be configured based on parameter(s) included in the legacy RACH configuration information. A base station may transmit the legacy RACH configuration information and the SBFD RACH configuration information to terminals through signaling. An SBFD terminal may receive the legacy RACH configuration information and the SBFD RACH configuration information through signaling from the base station. A legacy terminal may receive the legacy RACH configuration information and the SBFD RACH configuration information through signaling from the base station. According to the above-described method, signaling overhead of the RACH configuration information may increase.

The base station may generate RACH configuration information for SBFD terminals (e.g., SBFD RACH configuration information) and RACH configuration information for N-SBFD terminals (e.g., legacy RACH configuration information), may transmit the SBFD RACH configuration information to SBFD terminals through signaling, and may transmit the legacy RACH configuration information to N-SBFD terminals (e.g., legacy terminals) through signaling. A scheme in which the legacy RACH configuration information and the SBFD RACH configuration information are configured independently may be referred to as an independent configuration scheme.

Alternatively, the SBFD RACH configuration information may not be separately configured, and SBFD terminals and/or legacy terminals may perform RA procedures based on the legacy RACH configuration information. The legacy RACH configuration information may be commonly used by SBFD terminals and legacy terminals. A scheme in which only the legacy RACH configuration information is configured may be referred to as a common configuration scheme. The SBFD terminals and/or the base station may determine RO(s) belonging to a UL subband (e.g., RO(s) overlapping with the UL subband) as valid RO(s).

The base station may support at least one of the independent configuration scheme or the common configuration scheme. When the base station supports the independent configuration scheme, each SBFD terminal may expect to transmit an RA preamble (e.g., Msg1 or MsgA) in a RACH resource indicated by the SBFD RACH configuration information, and each legacy terminal may expect to transmit an RA preamble (e.g., Msg1 or MsgA) in a RACH resource indicated by the legacy RACH configuration information. The RACH resource may refer to a RACH occasion (RO).

ROs indicated by the SBFD RACH configuration information may be configured not only in SBFD resources (e.g., UL subband) but also in N-SBFD resources (e.g., UL resources and/or UL symbols within N-SBFD resources). Each SBFD terminal may determine an RO configured within SBFD resources (e.g., UL subband) as a valid RO and may transmit an RA preamble in the valid RO. Each SBFD terminal may determine an RO configured within N-SBFD resources as a valid RO and may transmit an RA preamble in the valid RO. An RO belonging to an N-SBFD resource among the ROs indicated by the SBFD RACH configuration information may overlap with an RO configured for legacy terminals (e.g., an RO indicated by the legacy RACH configuration information). In the above situation, transmission of an RA preamble by an SBFD terminal may collide with transmission of an RA preamble of a legacy terminal. Due to the collision issue, the SBFD terminal may not expect to transmit an RA preamble in an RO within an N-SBFD resource indicated by the SBFD RACH configuration information. In other words, the SBFD terminal may determine an RO belonging to an N-SBFD resource among the ROs indicated by the SBFD RACH configuration information as an invalid RO.

Since a UL subband has limited resources (e.g., time resources, frequency resources, and/or spatial resources), it may be difficult to apply existing RACH formats (e.g., legacy RACH formats) to the UL subband (e.g., UL region or UL resources). Information related to at least a RACH format (e.g., *prach-ConfigurationIndex*) may be separately configured for SBFD terminals. Information related to at least RO configuration (e.g., *ssb-perRACH-Occasion* and *ssb-perRACH-OccasionTwoStep*) may be separately configured for SBFD terminals. Information related to at least RACH frequency configuration (e.g., *msg1-FrequencyStart*, *msgA-RO-FrequencyStart*, *msg1-FDM*, and *msgA-RO-FDM*) may be separately configured for SBFD terminals. Each of *msg1-FrequencyStart* and *msgA-RO-FrequencyStart* may indicate an offset between PRB 0 and the lowest PRACH transmission occasion in the frequency domain.

### ◆ Proposal #1: single RACH configuration (e.g., common RACH configuration)

The base station may configure the same RACH configuration (e.g., a common RACH configuration) for SBFD terminals and legacy terminals. For example, the same PRACH configuration index (e.g., *PRACH-ConfigurationIndex* and *msgA-PRACH-ConfigurationIndex*) may be configured for SBFD terminals and legacy terminals. The SBFD terminals and the legacy terminals may transmit RA preambles in RO(s) existing in N-SBFD resources. The base station may expect to receive RA preambles from the SBFD terminals and/or the legacy terminals in RO(s) existing in N-SBFD resources. The SBFD terminals may transmit RA preambles in RO(s) existing within SBFD resources (e.g., UL subbands). The legacy terminals may not transmit RA preambles in RO(s) existing within SBFD resources (e.g., UL subbands). The base station may expect to receive RA preambles from the SBFD terminals in RO(s) existing within SBFD resources (e.g., UL subbands).

In an exemplary embodiment based on Proposal #1, no separate additional configuration may be required. In the exemplary embodiment based on Proposal #1, a validity rule for determining valid ROs may be required. For example, a rule for determining validity of an RO partially or completely overlapping with a guard band and/or a guard period may be required. The SBFD terminals may determine an RO partially or completely overlapping with the guard band and/or the guard period as an invalid RO and may not transmit an RA preamble in the invalid RO. The base station may not expect to receive an RA preamble in the invalid RO.

### ◆ Proposal #2: two RACH configurations (e.g., independent RACH configurations)

The legacy RACH configuration information and the SBFD RACH configuration information may be independently configured. The SBFD RACH configuration information and the legacy RACH configuration information may each include at least one of *RACH-ConfigCommon*, *RACH-ConfigCommonTwoStepRA*, *RACH-ConfigDedicated*, *RACH-ConfigGeneric*, or *RACH-ConfigGenericTwoStepRA*. Further, the SBFD RACH configuration information and the legacy RACH configuration information may each include information other than the above information.

Specifically, the SBFD RACH configuration information and the legacy RACH configuration information may each include a PRACH configuration index (e.g., *PRACH-ConfigurationIndex* and *msgA-PRACH-ConfigurationIndex*), frequency configuration parameters (e.g., *msg1-FrequencyStart*, *msgA-RO-FrequencyStart*, *msg1-FDM*, and *msgA-RO-FDM*), power-related parameters (e.g., *preambleReceivedTargetPower*, *powerRampingStep*, *msgA-PreamblePowerRampingStep*, and *msgA-PreambleReceivedTargetPower*), and SSB-RO mapping-related parameters (e.g., *ssb-perRACH-OccasionAndCB-PreamblesPerSSB* and *msgA-SSB-PerRACH-OccasionAndCB-PreamblesPerSSB*).

In an exemplary embodiment based on Proposal #2, a rule regarding in which RO a terminal (e.g., an SBFD terminal and/or a legacy terminal) transmits an RA preamble among the ROs configured by the legacy RACH configuration information and the ROs configured by the SBFD RACH configuration information may be required.

### ◆ Proposal #3: configuration of dedicated parameters (e.g., additional parameters) for SBFD terminals

Some parameters configured for legacy terminals (e.g., *PRACH-ConfigurationIndex*, *msgA-PRACH-ConfigurationIndex*, *msg1-FrequencyStart*, *msgA-RO-FrequencyStart*, *msg1-FDM*, and *msgA-RO-FDM*) may be additionally configured for SBFD terminals. The base station may transmit some parameters additionally configured for SBFD terminals to SBFD terminals through signaling. The SBFD terminals may receive some parameters through signaling from the base station. Alternatively, new parameters (e.g., dedicated parameters) for SBFD terminal may be added to the legacy RACH configuration information. The new parameters for SBFD terminals may be generated based on parameters included in the legacy RACH configuration information. The base station may transmit the legacy RACH configuration information including new parameters for SBFD terminals to terminals (e.g., legacy terminals and/or SBFD terminals). The legacy terminals and/or the SBFD terminals may receive the legacy RACH configuration information through signaling from the base station and may identify the new parameters for SBFD terminals included in the RACH configuration information.

In the RA procedure, the new parameters for SBFD terminals may be referred to as SBFD parameters. The new parameters (e.g., the SBFD parameters) may be included in the legacy RACH configuration information and/or the SBFD RACH configuration information. The SBFD parameters may include a time offset (e.g., time shift information) and/or a frequency offset (e.g., frequency shift information) for RO(s) configured by the legacy RACH configuration information. The ROs configured by the legacy RACH configuration information may be referred to as legacy ROs. In other words, legacy ROs may refer to ROs configured for legacy terminals (e.g., N-SBFD terminals). ROs configured by the SBFD RACH configuration information (e.g., SBFD parameters) may be referred to as SBFD ROs. In other words, SBFD ROs may refer to ROs configured for SBFD terminals.

The SBFD ROs may be configured at a location separated from the legacy ROs by the time offset in the time domain. The SBFD ROs may be configured at a location separated from the legacy ROs by the frequency offset in the frequency domain. A UL subband may be variably configured in the time domain and frequency domain, and the legacy ROs may be configured without considering the location of the UL subband configured in the time domain and frequency domain. Legacy ROs may not belong to the UL subband, and the time offset and/or the frequency offset may be used to move the legacy ROs into the UL subband.

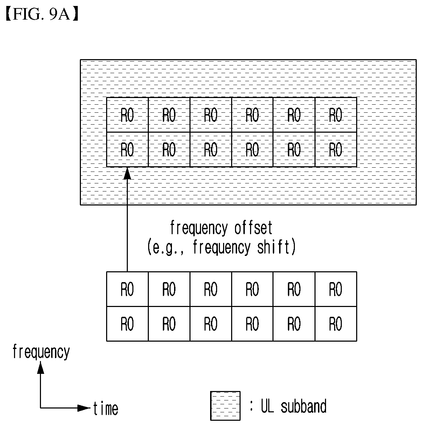

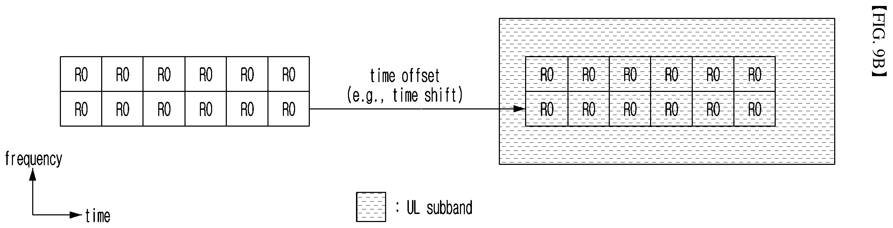

FIG. 9A is a conceptual diagram illustrating exemplary embodiments of a method of shifting legacy ROs in the frequency domain, and FIG. 9B is a conceptual diagram illustrating exemplary embodiments of a method of shifting legacy ROs in the time domain.

As shown in FIGS. 9A and 9B, ROs may correspond to legacy ROs. The legacy ROs may be configured based on legacy RACH configuration information. The legacy ROs may be located outside a UL subband. An SBFD terminal may be unable to transmit an RA preamble in a legacy RO located outside the UL subband. A base station may transmit a time offset (e.g., time shift information) and/or a frequency offset (e.g., frequency shift information) to terminals through signaling in order to move legacy ROs configured by the legacy RACH configuration information into the UL subband. The time offset and/or the frequency offset may be included in the legacy RACH configuration information and/or the SBFD RACH configuration information. A terminal may receive the time offset and/or the frequency offset through signaling from the base station.

In the exemplary embodiment of FIG. 9A, the frequency offset may be applied to the legacy ROs, and the legacy ROs to which the frequency offset is applied may belong to the UL subband. By application of the frequency offset, the legacy ROs belonging to the UL subband may be interpreted as (e.g., regarded as) SBFD ROs. The frequency offset may be applied to the lowest subcarrier or the highest subcarrier of consecutive legacy ROs.

In the exemplary embodiment of FIG. 9B, the time offset may be applied to the legacy ROs, and the legacy ROs to which the time offset is applied may belong to the UL subband. By application of the time offset, the legacy ROs belonging to the UL subband may be interpreted as (e.g., regarded as) SBFD ROs. The time offset may be applied to a start symbol or a last symbol of consecutive legacy ROs.

Meanwhile, the base station may transmit the time offset and/or the frequency offset to terminals using at least one of an RRC message, a MAC CE, or DCI. A terminal may receive the signaling message (e.g., an RRC message, a MAC CE, and/or DCI) from the base station and may identify the time offset and/or the frequency offset included in the signaling message. An RO may be configured on a slot basis. A slot in which an RO is configured may be referred to as a RACH slot. The base station may generate RACH slot configuration information and may transmit the RACH slot configuration information to terminals using at least one of an RRC message, a MAC CE, or DCI. A terminal may receive the signaling message (e.g., an RRC message, a MAC CE, and/or DCI) from the base station and may identify the RACH slot configuration information included in the signaling message.

The RACH slot configuration information may be configured as a bitmap. The RACH slot configuration information may include at least one of information on RACH slot(s), information on RO(s) belonging to each RACH slot, or information on validity of RO(s). An RO belonging to a RACH slot may be indicated (e.g., configured) as being valid. In other words, the RACH slot configuration information may include information indicating that ROs belonging to RACH slots are valid.

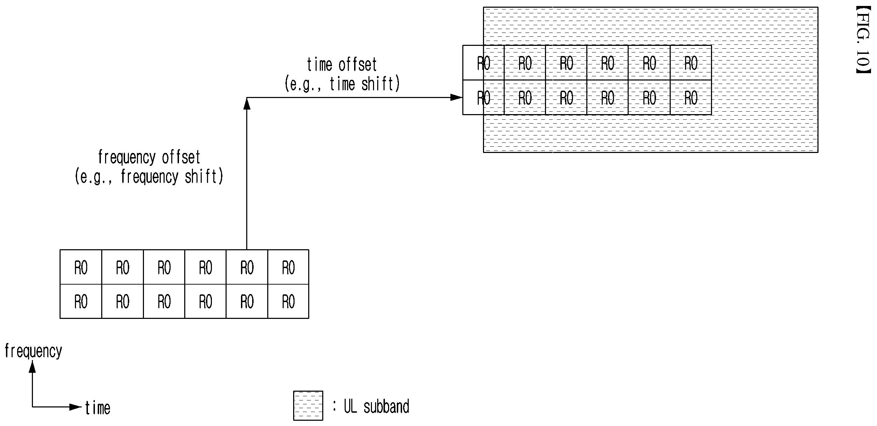

FIG. 10 is a conceptual diagram illustrating exemplary embodiments of a method of shifting legacy ROs in the time and frequency domains.

As shown in FIG. 10, ROs may correspond to legacy ROs. The legacy ROs may be configured based on legacy RACH configuration information. The legacy ROs may be located outside a UL subband. An SBFD terminal may be unable to transmit an RA preamble in a legacy RO located outside the UL subband. A base station may transmit a time offset (e.g., time shift information) and a frequency offset (e.g., frequency shift information) to terminals through signaling in order to move the legacy ROs configured by the legacy RACH configuration information into the UL subband. The time offset and the frequency offset may be included in the legacy RACH configuration information and/or SBFD RACH configuration information. A terminal may receive the time offset and the frequency offset through signaling from the base station.

The time offset and the frequency offset may be applied to the legacy ROs. By application of the time offset and the frequency offset, the legacy ROs belonging to the UL subband may be interpreted as (e.g., regarded as) SBFD ROs. The time offset may be applied to a start symbol or a last symbol of consecutive legacy ROs. The frequency offset may be applied to the lowest subcarrier or the highest subcarrier of consecutive legacy ROs.

Among the legacy ROs to which the time offset and the frequency offset are applied, some legacy ROs may not completely belong to the UL subband. In other words, some legacy ROs may be located across resources outside the UL subband (e.g., UL resources) and the UL subband. SBFD terminals and/or the base station may expect not to perform PRACH transmission in some legacy ROs (e.g., ROs that do not completely belong to the UL subband). Alternatively, PRACH transmission may be allowed in RO(s) belonging to a time duration (e.g., n symbols) before a start symbol of the UL subband among some legacy ROs (e.g., ROs that do not completely belong to the UL subband). PRACH transmission may be allowed in RO(s) belonging to a time duration (e.g., n symbols) after an end symbol of the UL subband among some legacy ROs (e.g., ROs that do not completely belong to the UL subband). The time duration (e.g., n symbols) may be defined in technical specifications. Alternatively, the base station may indicate the time duration (e.g., n symbols) to terminals through signaling. n may be a natural number.

PRACH transmission may be allowed in RO(s) belonging to a frequency region (e.g., m subcarriers) lower than the lowest subcarrier of the UL subband among some legacy ROs (e.g., ROs that do not completely belong to the UL subband). PRACH transmission may be allowed in RO(s) belonging to a frequency region (e.g., m subcarriers) higher than the highest subcarrier of the UL subband among some legacy ROs (e.g., ROs that do not completely belong to the UL subband). The frequency region (e.g., m subcarriers) may be defined in technical specifications. Alternatively, the base station may indicate the frequency region (e.g., m subcarriers) to terminals through signaling. m may be a natural number. SBFD terminals and/or the base station may expect to perform PRACH transmission in RO(s) in which PRACH transmission is allowed among some legacy ROs (e.g., ROs that do not completely belong to the UL subband).

### ◆ Proposal #4

The base station may transmit legacy RACH configuration information and SBFD RACH configuration information to terminals through signaling. Each terminal may receive the legacy RACH configuration information and the SBFD RACH configuration information through signaling from the base station. An SBFD terminal may expect to transmit an RA preamble in an RO indicated by the legacy RACH configuration information (e.g., a legacy RO). In other words, an SBFD terminal may expect to transmit an RA preamble not only in an RO indicated by the SBFD RACH configuration information (e.g., an SBFD RO) but also in an RO indicated by the legacy RACH configuration information (e.g., a legacy RO). An SBFD terminal may determine both an SBFD RO and a legacy RO as valid ROs.

When a priority of SBFD terminals is higher than a priority of legacy terminals, the exemplary embodiment based on Proposal #4 may be performed. An SBFD terminal may perform transmission or retransmission of an RA preamble in an RO based on RACH configuration information associated with the RO (e.g., power-related parameters or transmission-related parameters). The power-related parameters may include power control adjustment information, *preambleReceivedTargetPower*, *powerRampingStep*, *msgA-PreamblePowerRampingStep*, *msgA-PreambleReceivedTargetPower*, and the like. For example, when an SBFD terminal performs transmission or retransmission of an RA preamble in an SBFD RO, the SBFD terminal may perform transmission or retransmission of the RA preamble based on the SBFD RACH configuration information. When an SBFD terminal performs transmission or retransmission of an RA preamble in a legacy RO, the SBFD terminal may perform transmission or retransmission of the RA preamble based on the legacy RACH configuration information.

The SBFD terminal may separately perform an RA preamble transmission procedure or retransmission procedure in legacy ROs and an RA preamble transmission procedure or retransmission procedure in SBFD ROs. In other words, the RA preamble transmission procedure or retransmission procedure in legacy ROs and the RA preamble transmission procedure or retransmission procedure in SBFD ROs may be performed in parallel. An RO used by the SBFD terminal for PRACH transmission (e.g., transmission of an RA preamble) may be an SBFD RO and/or a legacy RO.

### ◆ Proposal #5

The base station may transmit legacy RACH configuration information and SBFD RACH configuration information to terminals through signaling. Each terminal may receive the legacy RACH configuration information and the SBFD RACH configuration information through signaling from the base station. An SBFD terminal may not expect to transmit an RA preamble in a legacy RO indicated by the legacy RACH configuration information. In other words, an SBFD terminal may transmit an RA preamble in an SBFD RO indicated by the SBFD RACH configuration information and may not transmit an RA preamble in a legacy RO indicated by the legacy RACH configuration information. An SBFD terminal may determine an SBFD RO as a valid RO and may determine a legacy RO as an invalid RO.

For fairness between SBFD terminals and legacy terminals, SBFD terminals may perform RA procedures based on the SBFD RACH configuration information, and legacy terminals may perform RA procedures based on the legacy RACH configuration information. In other words, SBFD terminals may not perform RA procedures based on the legacy RACH configuration information, and legacy terminals may not perform RA procedures based on the SBFD RACH configuration information.

A situation in which an SBFD RO overlaps with a legacy RO may occur. An SBFD terminal may not expect to transmit an RA preamble in an SBFD RO overlapping with a legacy RO. The SBFD terminal may determine the SBFD RO overlapping with a legacy RO as an invalid RO. A legacy terminal may not expect to transmit an RA preamble in a legacy RO overlapping with an SBFD RO. The legacy terminal may determine the legacy RO overlapping with an SBFD RO as an invalid RO.

The number of SBFD terminals having SBFD ROs overlapping with legacy ROs may be relatively small, and each SBFD terminal may not transmit an RA preamble in an SBFD RO overlapping with a legacy RO. Alternatively, since a contention resolution operation is performed in an RA procedure, an SBFD terminal and/or a legacy terminal may expect to transmit an RA preamble in all ROs regardless of an RO type (e.g., SBFD RO or legacy RO). All ROs may include overlapping RO(s).

### ◆ Proposal #6

The base station may transmit legacy RACH configuration information and SBFD RACH configuration information to terminals through signaling. Each terminal may receive the legacy RACH configuration information and the SBFD RACH configuration information through signaling from the base station. The SBFD RACH configuration information may be valid within a UL subband. In other words, RO(s) belonging to the UL subband among ROs configured by the SBFD RACH configuration information may be determined as valid RO(s), and RO(s) not belonging to the UL subband among the ROs configured by the SBFD RACH configuration information may be determined as invalid RO(s).

ROs according to an RO pattern based on the SBFD RACH configuration information may exist not only in the UL subband but also in UL resources (e.g., UL resources outside the UL subband). An SBFD RO existing in UL resources outside the UL subband may overlap with a legacy RO. When an SBFD terminal performs PRACH transmission in an SBFD RO overlapping with a legacy RO and a legacy terminal performs PRACH transmission in the legacy RO overlapping with the SBFD RO, interference and/or collision between the PRACH transmissions may occur. Accordingly, only RO(s) belonging to the UL subband among the ROs configured by the SBFD RACH configuration information may be determined as valid RO(s), and SBFD terminals may perform PRACH transmissions in the valid RO(s).

### ◆ Proposal #7

The base station may transmit legacy RACH configuration information and SBFD RACH configuration information to terminals through signaling. Each terminal may receive the legacy RACH configuration information and the SBFD RACH configuration information through signaling from the base station. The SBFD RACH configuration information may be valid not only in a UL subband but also in UL resources (e.g., UL resources outside the UL subband). An SBFD terminal may expect to transmit an RA preamble in an SBFD RO existing in UL resources outside the UL subband. An SBFD terminal may transmit an RA preamble in an SBFD RO indicated by the SBFD RACH configuration information and/or a legacy RO indicated by the legacy RACH configuration information.

Meanwhile, terminals may determine valid RO(s) based on a validity rule and may perform SSB-RO mapping and/or preamble-SSB mapping for the valid RO(s). SSB-RO mapping may refer to mapping SSBs (e.g., SSB indexes) to valid ROs. Preamble-SSB mapping may refer to mapping preambles (e.g., preamble indexes or RA preamble indexes) to SSBs (e.g., SSB indexes). A mapping rule for valid ROs (e.g., SBFD ROs) in the time and frequency domains may be the same as a mapping rule for legacy ROs. The mapping rule for legacy ROs may be a frequency-first mapping rule. When the frequency-first mapping rule is applied, SSBs (e.g., SSB indexes) may first be mapped to ROs multiplexed in the frequency domain, and thereafter, SSBs (e.g., SSB indexes) may be mapped to ROs multiplexed in the time domain.

Since a UL subband has a limited size, a new mapping rule may be applied to SBFD ROs instead of the mapping rule for legacy ROs. The new mapping rule may be a time-first mapping rule. When the time-first mapping rule is applied, SSBs (e.g., SSB indexes) may first be mapped to ROs multiplexed in the time domain, and thereafter, SSBs (e.g., SSB indexes) may be mapped to ROs multiplexed in the frequency domain.

The base station may transmit information on the mapping rule (e.g., the frequency-first mapping rule or the time-first mapping rule) to terminals through signaling. Terminals may receive the information on the mapping rule through signaling from the base station and may perform SSB-RO mapping based on the mapping rule indicated by the information.

When ROs consecutively exist in N-SBFD symbol(s) and SBFD symbol(s), the above-described mapping rule (e.g., the time-first mapping rule) may be applied to the ROs. The above-described exemplary embodiment may be applied when the ROs are configured based on the SBFD RACH configuration information. When a legacy RACH configuration and an SBFD RACH configuration are independently indicated to for terminals (e.g., independently configured for the terminals), the terminals may apply an existing mapping rule (e.g., the frequency-first mapping rule) to legacy RO(s) based on the legacy RACH configuration, and terminals may apply a new mapping rule (e.g., the time-first mapping rule) to SBFD RO(s) based on the SBFD RACH configuration. A mapping operation for legacy RO(s) and a mapping operation for SBFD RO(s) may be independently performed.

An SBFD terminal may transmit an RA preamble in an SBFD RO using power-related parameters included in the SBFD RACH configuration information. An SBFD terminal may transmit an RA preamble in a legacy RO using power parameters included in the legacy RACH configuration information. The above-described exemplary embodiment may be performed for fairness between SBFD terminals and legacy terminals.

An SBFD terminal may transmit an RA preamble using power-related parameters associated with signaling for RO configuration. For example, when an RO located in an N-SBFD resource is configured based on the SBFD RACH configuration information, the SBFD terminal may transmit an RA preamble in the RO using power parameters included in the SBFD RACH configuration information. When an RO located in an N-SBFD resource is configured based on the legacy RACH configuration information, the SBFD terminal may transmit an RA preamble in the RO using power parameters included in the legacy RACH configuration information.

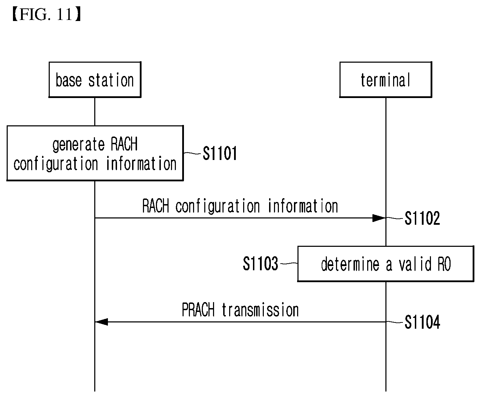

FIG. 11 is a sequence diagram illustrating an RA procedure in a communication system.

As shown in FIG. 11, a base station and/or terminals may support an SBFD operation. The base station may generate RACH configuration information (S1101). The RACH configuration information generated in step S1101 may include SBFD RACH configuration information and legacy RACH configuration information. In other words, the base station may generate the SBFD RACH configuration information and the legacy RACH configuration information. The SBFD RACH configuration information and the legacy RACH configuration information may each include at least one of *RACH-ConfigCommon*, *RACH-ConfigCommonTwoStepRA*, *RACH-ConfigDedicated*, *RACH-ConfigGeneric*, or *RACH-ConfigGenericTwoStepRA*. The SBFD RACH configuration information and the legacy RACH configuration information may be generated independently of each other. Alternatively, the SBFD RACH configuration information (e.g., some parameter(s) included in the SBFD RACH configuration information) may be generated (e.g., determined) based on parameter(s) included in the legacy RACH configuration information.

The base station may transmit a signaling message (e.g., an RRC message, a MAC CE, and/or DCI) including the SBFD RACH configuration information and the legacy RACH configuration information to terminals (S1102). Each terminal may receive the signaling message from the base station (S1102). Each terminal may identify the SBFD RACH configuration information and the legacy RACH configuration information included in the signaling message. The terminal may determine valid ROs based on at least one of the SBFD RACH configuration information or the legacy RACH configuration information (S1103).

At least one of the SBFD RACH configuration information or the legacy RACH configuration information may include at least one of a time offset or a frequency offset. SBFD ROs based on the SBFD RACH configuration information may be determined by applying at least one of the time offset or the frequency offset to legacy ROs configured by the legacy RACH configuration information. An SSB mapping rule for SBFD ROs configured by the SBFD RACH configuration information may be configured differently from an SSB mapping rule for legacy ROs configured by the legacy RACH configuration information. The mapping rule may be the frequency-first mapping rule or the time-first mapping rule.

Based on Proposal #4, a terminal (e.g., an SBFD terminal) may determine SBFD ROs configured by the SBFD RACH configuration information and legacy ROs configured by the legacy RACH configuration information as valid ROs. The terminal may perform PRACH transmission in a valid RO (S1104). In other words, the terminal may transmit an RA preamble to the base station in the valid RO. The base station may receive the RA preamble from the terminal in RO(s) configured by the SBFD RACH configuration information and/or the legacy RACH configuration information (S1104). Based on Proposal #4, the base station may identify a valid RO for a terminal and may perform a monitoring operation for reception of an RA preamble in the valid RO. Alternatively, the base station may perform a monitoring operation for reception of an RA preamble in all ROs configured by the SBFD RACH configuration information and/or the legacy RACH configuration information. The base station may estimate an RO in which an RA preamble is received as a valid RO for the terminal.

Based on Proposal #5, a terminal (e.g., an SBFD terminal) may determine SBFD ROs configured by the SBFD RACH configuration information as valid ROs and may determine legacy ROs configured by the legacy RACH configuration information as invalid ROs. The SBFD ROs may be configured in SBFD resources (e.g., a UL subband) and/or N-SBFD resources (e.g., UL resources). When an SBFD RO is configured in an N-SBFD resource, the SBFD RO may overlap with a legacy RO. The terminal may determine the SBFD RO overlapping with a legacy RO as an invalid RO. Alternatively, the terminal may determine the SBFD RO overlapping with a legacy RO as a valid RO. The terminal may perform PRACH transmission in the valid RO (S1104). In other words, the terminal may transmit an RA preamble to the base station in the valid RO. The base station may receive the RA preamble from the terminal in RO(s) configured by the SBFD RACH configuration information and/or the legacy RACH configuration information (S1104). Based on Proposal #5, the base station may identify a valid RO for the terminal and may perform a monitoring operation for reception of an RA preamble in the valid RO. Alternatively, the base station may perform a monitoring operation for reception of an RA preamble in all ROs configured by the SBFD RACH configuration information and/or the legacy RACH configuration information. The base station may estimate an RO in which an RA preamble is received as a valid RO for the terminal.

Based on Proposal #6, a terminal (e.g., an SBFD terminal) may determine SBFD RO(s) belonging to SBFD resources (e.g., a UL subband) among SBFD ROs configured by the SBFD RACH configuration information as valid RO(s), and may determine SBFD RO(s) not belonging to the SBFD resources (e.g., the UL subband) among the SBFD ROs as invalid RO(s). The terminal may perform PRACH transmission in a valid RO (S1104). In other words, the terminal may transmit an RA preamble to the base station in a valid RO. The base station may receive the RA preamble from the terminal in RO(s) configured by the SBFD RACH configuration information and/or the legacy RACH configuration information (S1104). Based on Proposal #6, the base station may identify a valid RO for the terminal and may perform a monitoring operation for reception of an RA preamble in the valid RO. Alternatively, the base station may perform a monitoring operation for reception of an RA preamble in all ROs configured by the SBFD RACH configuration information and/or the legacy RACH configuration information. The base station may estimate an RO in which an RA preamble is received as a valid RO for the terminal.

Based on Proposal #7, a terminal (e.g., an SBFD terminal) may determine SBFD RO(s) belonging to SBFD resources (e.g., a UL subband) among SBFD ROs configured by the SBFD RACH configuration information as valid RO(s), and may determine SBFD RO(s) not belonging to the SBFD resources (e.g., the UL subband) among the SBFD ROs as valid RO(s). The terminal may perform PRACH transmission in a valid RO (S1104). In other words, the terminal may transmit an RA preamble to the base station in the valid RO. The base station may receive the RA preamble from the terminal in RO(s) configured by the SBFD RACH configuration information and/or the legacy RACH configuration information (S1104). Based on Proposal #7, the base station may identify a valid RO for the terminal and may perform a monitoring operation for reception of an RA preamble in the valid RO. Alternatively, the base station may perform a monitoring operation for reception of an RA preamble in all ROs configured by the SBFD RACH configuration information and/or the legacy RACH configuration information. The base station may estimate an RO in which an RA preamble is received as a valid RO for the terminal.

In the present disclosure, a UL subband may refer to a UL subband for SBFD operation. In the present disclosure, a terminal may transmit information indicating whether the terminal supports function(s) proposed in the present disclosure to a base station. The information indicating whether the terminal supports the function(s) may be included in a UE capability report. The base station may receive the UE capability report from the terminal and may perform signaling and/or operations based on information included in the UE capability report (e.g., information indicating whether the terminal supports the function(s)).

A configuration for a UL subband (e.g., an SBFD configuration) may be transmitted through signaling (e.g., RRC signaling). The SBFD configuration may be transmitted after transmission of a TDD common configuration. The methods proposed in the present disclosure may be applied not only to a licensed band but also to an unlicensed band. The methods proposed in the present disclosure may be applied to sidelink and/or supplementary uplink (SUL). For example, the methods proposed in the present disclosure may be applied to determine a transmit power in sidelink and/or SUL. Each proposal of the present disclosure may be independently applied. Alternatively, a combination of the proposals of the present disclosure may be applied. Some proposals of the present disclosure may be applied to other proposals.

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

## Claims

1. A method of a user equipment (UE), the method comprising:
receiving, from a base station, subband full duplex (SBFD) random access channel (RACH) configuration information and legacy RACH configuration information;
determining a valid RACH occasion (RO) based on at least one of the SBFD RACH configuration information or the legacy RACH configuration information; and
transmitting, to the base station, a random access (RA) preamble in the valid RO,
wherein the SBFD RACH configuration information is configured for SBFD UEs supporting an SBFD operation, and the legacy RACH configuration information is configured for legacy UEs not supporting the SBFD operation.

2. The method of claim 1, wherein an SBFD RO configured based on the SBFD RACH configuration information and a legacy RO configured based on the legacy RACH configuration information are each determined to be a valid RO.

3. The method of claim 1, wherein an SBFD RO configured based on the SBFD RACH configuration information is determined to be a valid RO, and a legacy RO configured based on the legacy RACH configuration information is determined to be an invalid RO.

4. The method of claim 1, wherein one or more SBFD ROs belonging to SBFD resources among SBFD ROs configured based on the SBFD RACH configuration information are determined to be valid ROs, and at least one SBFD RO not belonging to the SBFD resources among the SBFD ROs is determined to be an invalid RO.

5. The method of claim 1, wherein one or more SBFD ROs belonging to SBFD resources among SBFD ROs configured based on the SBFD RACH configuration information are determined to be valid ROs, and at least one SBFD RO not belonging to the SBFD resources among the SBFD ROs is determined to be a valid RO.

6. The method of claim 1, wherein an SBFD RO not overlapping with a legacy RO configured based on the legacy RACH configuration information among SBFD ROs configured based on the SBFD RACH configuration information is determined to be a valid RO, and an SBFD RO overlapping with the legacy RO among the SBFD ROs is determined to be an invalid RO.

7. The method of claim 1, wherein the SBFD RACH configuration information and the legacy RACH configuration information each include at least one of *RACH-ConfigCommon*, *RACH-ConfigCommonTwoStepRA*, *RACH-ConfigDedicated*, *RACH-ConfigGeneric*, or *RACH-ConfigGenericTwoStepRA*.

8. The method of claim 1, wherein at least one of the SBFD RACH configuration information or the legacy RACH configuration information includes at least one of a time offset or a frequency offset, and SBFD ROs based on the SBFD RACH configuration information are determined by applying at least one of the time offset or the frequency offset to legacy ROs configured by the legacy RACH configuration information.

9. The method of claim 1, wherein a mapping rule of synchronization signal blocks (SSBs) for SBFD ROs configured based on the SBFD RACH configuration information is configured differently from a mapping rule of SSBs for legacy ROs configured based on the legacy RACH configuration information, and the mapping rule is either a frequency-first mapping rule or a time-first mapping rule.

10. A method of a base station, the method comprising:
generating subband full duplex (SBFD) random access channel (RACH) configuration information for SBFD user equipments (UEs) supporting an SBFD operation;
generating legacy RACH configuration information for legacy UEs not supporting the SBFD operation;
transmitting the SBFD RACH configuration information and the legacy RACH configuration information to a UE; and
receiving, from the UE, a random access (RA) preamble in at least one of an SBFD RACH occasion (RO) configured based on the SBFD RACH configuration information or a legacy RO configured based on the legacy RACH configuration information.

11. The method of claim 10, wherein the SBFD RACH configuration information and the legacy RACH configuration information each include at least one of *RACH-ConfigCommon*, *RACH-ConfigCommonTwoStepRA*, *RACH-ConfigDedicated*, *RACH-ConfigGeneric*, or *RACH-ConfigGenericTwoStepRA*, and the SBFD RACH configuration information is generated independently of the legacy RACH configuration information.

12. The method of claim 10, wherein the SBFD RACH configuration information is generated based on one or more parameters included in the legacy RACH configuration information.

13. The method of claim 10, wherein at least one of the SBFD RACH configuration information or the legacy RACH configuration information includes at least one of a time offset or a frequency offset, and the SBFD RO is determined by applying at least one of the time offset or the frequency offset to the legacy RO.

14. The method of claim 10, wherein a mapping rule of synchronization signal blocks (SSBs) for SBFD ROs is configured differently from a mapping rule of SSBs for legacy ROs, and the mapping rule is either a frequency-first mapping rule or a time-first mapping rule.

15. A user equipment (UE) comprising at least one processor, wherein the at least one processor causes the UE to perform:
receiving, from a base station, subband full duplex (SBFD) random access channel (RACH) configuration information and legacy RACH configuration information;
determining a valid RACH occasion (RO) based on at least one of the SBFD RACH configuration information or the legacy RACH configuration information; and
transmitting, to the base station, a random access (RA) preamble in the valid RO,
wherein the SBFD RACH configuration information is configured for SBFD UEs supporting an SBFD operation, and the legacy RACH configuration information is configured for legacy UEs not supporting the SBFD operation.

16. The UE of claim 15, wherein an SBFD RO configured based on the SBFD RACH configuration information and a legacy RO configured based on the legacy RACH configuration information are each determined to be a valid RO.

17. The UE of claim 15, wherein an SBFD RO configured based on the SBFD RACH configuration information is determined to be a valid RO, and a legacy RO configured based on the legacy RACH configuration information is determined to be an invalid RO.

18. The UE of claim 15, wherein one or more SBFD ROs belonging to SBFD resources among SBFD ROs configured based on the SBFD RACH configuration information are determined to be valid ROs, and at least one SBFD RO not belonging to the SBFD resources among the SBFD ROs is determined to be an invalid RO.

19. The UE of claim 15, wherein one or more SBFD ROs belonging to SBFD resources among SBFD ROs configured based on the SBFD RACH configuration information are determined to be valid ROs, and at least one SBFD RO not belonging to the SBFD resources among the SBFD ROs is determined to be a valid RO.

20. The UE of claim 15, wherein an SBFD RO not overlapping with a legacy RO configured based on the legacy RACH configuration information among SBFD ROs configured based on the SBFD RACH configuration information is determined to be a valid RO, and an SBFD RO overlapping with the legacy RO among the SBFD ROs is determined to be an invalid RO.
